(19) 

Europäisches
Patentamt
European
Patent Office
Office européen
des brevets

(11) **EP 4 362 573 A1**

(12) **EUROPEAN PATENT APPLICATION**
published in accordance with Art. 153(4) EPC

(43) Date of publication:
**01.05.2024 Bulletin 2024/18**

(21) Application number: **21946357.7**

(22) Date of filing: **22.06.2021**

(51) International Patent Classification (IPC):
***H04W 68/00*** *(2009.01)*

(52) Cooperative Patent Classification (CPC):
**H04W 68/00**

(86) International application number:
**PCT/CN2021/101631**

(87) International publication number:
**WO 2022/266855 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LI, Yanhua
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **PACKET PAGING METHOD AND APPARATUS, COMMUNICATION DEVICE, AND STORAGE
MEDIUM**

(57) Embodiments of the present disclosure provide a packet paging method. The method is executed by a terminal. The method comprises: receiving configuration information of packet paging, wherein the configuration information is at least used to indicate that a network supports or does not support a terminal to obtain paging group information in a predetermined mode, and the paging group information is used by the terminal to monitor a paging message.

FIG. 2

EP 4 362 573 A1

**Description**

**FIELD**

The present disclosure relates to, but is not limited to, the technical field of wireless communications, and more particularly to a subgroup paging method, a subgroup paging apparatus, a communication device, and a storage medium.

**BACKGROUND**

Paging may realize an important function of a wireless communication. The function of paging is to notify a paged terminal to respond to a network by a base station according to a need of the network. The base station and a terminal may agree on a paging occasion (PO). The base station may send a paging message at the paging occasion, and the terminal may receive the paging message at a corresponding paging occasion.

In the related technologies, a terminal is paged in a subgroup paging manner, and a network may page all terminals in a subgroup by sending a paging message, without sending a paging message separately for each terminal. After receiving the subgroup paging message, the terminal determines whether it belongs to a paged subgroup. In case that the terminal belongs to the paged subgroup, the terminal responds to the subgroup paging message. In case that the terminal does not belong to the paged subgroup, the terminal ignores the subgroup paging message. At this time, how to implement the above-mentioned mechanism is a problem that needs to be considered.

**SUMMARY**

Embodiments of the present disclosure disclose the technical field of wireless communications, and more particularly relates to a subgroup paging method, a subgroup paging apparatus, a communication device, and a storage medium.

According to a first aspect of embodiments of the present disclosure, there is provided a subgroup paging method. The method is performed by a terminal, and the method includes receiving configuration information for subgroup paging. The configuration information is at least configured to indicate that a network supports or does not support the terminal to acquire subgroup information for paging in a predetermined manner, and the subgroup information for paging is configured for the terminal to monitor a paging message.

In an embodiment, the predetermined manner includes one or more of a first predetermined manner being a manner of receiving subgroup information for paging which is allocated by the network, a second predetermined manner being a manner of randomly selecting subgroup information for paging.

In an embodiment, the subgroup information for paging includes one or more of identification information of a subgroup for paging which is allocated by the network, paging probability information of the terminal being paged, that is determined by the network, probability level information of a paging probability of the terminal being paged, that is determined by the network.

In an embodiment, the method further includes determining a manner of monitoring the paging message according to a result of the network receiving the information for subgroup paging, in response to the network supporting the terminal to acquire the subgroup information for paging in the first predetermined manner but not supporting the terminal to acquire the subgroup information for paging in the second predetermined manner.

In an embodiment, determining the manner of monitoring the paging message according to the result of the network receiving the information for subgroup paging includes determining to monitor the paging message according to the subgroup information for paging, in response to having received the subgroup information for paging sent by the network, or determining to monitor the paging message according to predetermined subgroup information for paging, in response to not having received the subgroup information for paging sent by the network, or determining to monitor the paging message on a common paging resource, in response to not having received the subgroup information for paging sent by the network.

In an embodiment, the method further includes determining to monitor the paging message according to randomly selected subgroup information for paging, in response to the network not supporting the terminal to acquire the subgroup information for paging in the first predetermined manner but supporting the terminal to acquire the subgroup information for paging in the second predetermined manner.

In an embodiment, the method further includes determining to monitor the paging message on a common paging resource, in response to neither the network supporting the terminal to acquire the subgroup information for paging in the first predetermined manner nor the network supporting the terminal to acquire the subgroup information for paging in the second predetermined manner.

In an embodiment, the method further includes determining that the network does not support the terminal to acquire the subgroup information for paging in the first predetermined manner or the second predetermined manner, in response to not having received the subgroup information for paging sent by the network.

In an embodiment, the method further includes determining a manner of monitoring the paging message according to a result of the network receiving the information for subgroup paging, in response to both the network supporting the terminal to acquire the subgroup information for paging in the first predetermined manner and the second predetermined manner.

In an embodiment, determining the manner of monitoring the paging message according to the result of the network receiving the information for subgroup paging includes determining to monitor the paging message according to the subgroup information for paging, in response to having received the subgroup information for paging sent by the network, or determining to monitor the paging message according to randomly selected subgroup information for paging, in response to not having received the subgroup information for paging sent by the network.

In an embodiment, the method further includes determining that the network supports the terminal to acquire the subgroup information for paging in the second predetermined manner, in response to having received the subgroup information for paging, or determining that the network does not support the terminal to acquire the subgroup information for paging in the first predetermined manner or the second predetermined manner, in response to not having received the subgroup information for paging.

In an embodiment, the method further includes monitoring, by the terminal in a radio resource control (RRC) idle state, the paging message according to the subgroup information for paging, in response to the network supporting the terminal in the RRC idle state to acquire the subgroup information for paging in the predetermined manner but not supporting the terminal in a RRC inactive state to acquire the subgroup information for paging in the predetermined manner, or monitoring, by the terminal in a RRC inactive state, the paging message on a common paging resource, in response to the network supporting the terminal in a RRC idle state to acquire the subgroup information for paging in the predetermined manner but not supporting the terminal in the RRC inactive state to acquire the subgroup information for paging in the predetermined manner.

In an embodiment, the method further includes monitoring, by the terminal in a RRC idle state, the paging message on a common paging resource, in response to the network not supporting the terminal in the RRC idle state to acquire the subgroup information for paging in the predetermined manner but supporting the terminal in a RRC inactive state to acquire the subgroup information for paging in the predetermined manner, or monitoring, by the terminal in a RRC inactive state, the paging message according to the subgroup information for paging, in response to the network not supporting the terminal in a RRC idle state to acquire the subgroup information for paging in the predetermined manner but supporting the terminal in the RRC inactive state to acquire the subgroup information for paging in the predetermined manner.

In an embodiment, the method further includes monitoring, by the terminal in a RRC disconnected state, the paging message according to the subgroup information for paging sent by the network, in response to the network supporting the terminal in a RRC idle state to acquire the subgroup information for paging in the predetermined manner and supporting the terminal in a RRC inactive state to acquire the subgroup information for paging in the predetermined manner. The RRC disconnected state includes the RRC idle state and the RRC inactive state.

In an embodiment, the method further includes monitoring, by the terminal in a RRC disconnected state, the paging message on a common paging resource, in response to the network not supporting the terminal in a RRC idle state to acquire the subgroup information for paging in the predetermined manner and not supporting the terminal in a RRC inactive state to acquire the subgroup information for paging in the predetermined manner. The RRC disconnected state includes the RRC idle state and the RRC inactive state.

In an embodiment, receiving the configuration information for the subgroup paging includes receiving the configuration information sent by a base station via a broadcast message, or receiving the configuration information sent by a base station via a dedicated message.

According to a second aspect of embodiments of the present disclosure, there is provided a subgroup paging method. The method is performed by a base station, and the method includes sending configuration information for subgroup paging to a terminal. The configuration information is at least configured to indicate that a network supports or does not support the terminal to acquire subgroup information for paging in a predetermined manner, and the subgroup information for paging is configured for the terminal to monitor a paging message.

In an embodiment, the predetermined manner includes one or more of a first predetermined manner being a manner of receiving subgroup information for paging which is allocated by the network, a second predetermined manner being a manner of randomly selecting subgroup information for paging.

In an embodiment, the subgroup information for paging includes one or more of identification information of a subgroup for paging which is allocated by the network, paging probability information of the terminal being paged, that is determined by the network, probability level information of a paging probability of the terminal being paged, that is determined by the network.

In an embodiment, sending the configuration information for the subgroup paging to the terminal includes sending the configuration information to the terminal via a broadcast message, or sending the configuration information to the terminal via a dedicated message.

In an embodiment, the method further includes sending auxiliary information to a core network device. The auxiliary information is at least configured to indicate that the network supports or does not support the terminal to acquire the subgroup information for paging in the predetermined manner.

In an embodiment, sending the auxiliary information to the core network device includes sending the auxiliary information to the core network device by using a NG interface setup request message, or sending the auxiliary information to the core network device by using a NG interface setup response message.

According to a third aspect of embodiments of the present disclosure, there is provided a subgroup paging method. The method is performed by a core network device, and the method includes issuing configuration information for subgroup paging. The configuration information is at least configured to indicate that a network supports or does not support a terminal to acquire subgroup information for paging in a predetermined manner, and the subgroup information for paging is configured for the terminal to monitor a paging message.

In an embodiment, the predetermined manner includes one or more of a first predetermined manner being a manner of receiving subgroup information for paging which is allocated by the network, a second predetermined manner being a manner of randomly selecting subgroup information for paging.

In an embodiment, the subgroup information for paging includes one or more of identification information of a subgroup for paging which is allocated by the network, paging probability information of the terminal being paged, that is determined by the network, probability level information of a paging probability of the terminal being paged, that is determined by the network.

In an embodiment, issuing the configuration information for the subgroup paging includes issuing the configuration information for the subgroup paging by using a non-access stratum (NAS) message.

In an embodiment, issuing the configuration information for the subgroup paging includes sending the configuration information to a base station by using a NG interface setup request message, or sending the configuration information to a base station by using a NG interface setup response message.

According to a fourth aspect of embodiments of the present disclosure, there is provided a subgroup paging apparatus. The apparatus includes a receiving module configured to receive configuration information for subgroup paging. The configuration information is at least configured to indicate that a network supports or does not support a terminal to acquire subgroup information for paging in a predetermined manner, and the subgroup information for paging is configured for the terminal to monitor a paging message.

According to a fifth aspect of embodiments of the present disclosure, there is provided a subgroup paging apparatus. The apparatus includes a sending module configured to send configuration information for subgroup paging to a terminal. The configuration information is at least configured to indicate that a network supports or does not support the terminal to acquire subgroup information for paging in a predetermined manner, and the subgroup information for paging is configured for the terminal to monitor a paging message.

According to a sixth aspect of embodiments of the present disclosure, there is provided a subgroup paging apparatus. The apparatus includes an issuing module configured to issue configuration information for subgroup paging. The configuration information is at least configured to indicate that a network supports or does not support a terminal to acquire subgroup information for paging in a predetermined manner, and the subgroup information for paging is configured for the terminal to monitor a paging message.

According to a seventh aspect of embodiments of the present disclosure, there is provided a communication device. The communication device includes a processor, and a memory for storing instructions executable by the processor. The processor is configured to implement the method of any one of embodiments of the present disclosure when running the executable instructions.

According to an eighth aspect of embodiments of the present disclosure, there is provided a computer storage medium. The computer storage medium has stored therein computer-executable programs that, when executed by a processor, cause the method of any one of embodiments of the present disclosure to be implemented.

In the embodiments of the present disclosure, the configuration information for the subgroup paging is received. The configuration information is at least configured to indicate that the network supports or does not support the terminal to acquire the subgroup information for paging in the predetermined manner, and the subgroup information for paging is configured for the terminal to monitor the paging message. Here, after receiving the configuration information for the subgroup paging, the terminal may determine, according to the configuration information, that the network supports or does not support the terminal to acquire the subgroup information for paging in the predetermined manner. The case of paging failure may be reduced compared to a way in which the subgroup information for paging is always acquired in the predetermined manner without determining whether the network supports the predetermined manner, which may improve the reliability of the network paging the terminal in a subgroup paging manner.

## BRIEF DESCRIPTION OF THE DRAWINGS

FIG. 1 is a schematic diagram showing a wireless communication system according to an illustrative embodiment.

FIG. 2 is a flow chart showing a subgroup paging method according to an illustrative embodiment.

FIG. 3 is a flow chart showing a subgroup paging method according to an illustrative embodiment.

FIG. 4 is a flow chart showing a subgroup paging method according to an illustrative embodiment.

FIG. 5 is a flow chart showing a subgroup paging method according to an illustrative embodiment.

FIG. 6 is a flow chart showing a subgroup paging method according to an illustrative embodiment.

FIG. 7 is a flow chart showing a subgroup paging method according to an illustrative embodiment.

FIG. 8 is a flow chart showing a subgroup paging method according to an illustrative embodiment.

FIG. 9 is a flow chart showing a subgroup paging method according to an illustrative embodiment.

FIG. 10 is a flow chart showing a subgroup paging method according to an illustrative embodiment.

FIG. 11 is a flow chart showing a subgroup paging method according to an illustrative embodiment.

FIG. 12 is a flow chart showing a subgroup paging method according to an illustrative embodiment.

FIG. 13 is a flow chart showing a subgroup paging method according to an illustrative embodiment.

FIG. 14 is a flow chart showing a subgroup paging method according to an illustrative embodiment.

FIG. 15 is a flow chart showing a subgroup paging method according to an illustrative embodiment.

FIG. 16 is a flow chart showing a subgroup paging method according to an illustrative embodiment.

FIG. 17 is a flow chart showing a subgroup paging method according to an illustrative embodiment.

FIG. 18 is a flow chart showing a subgroup paging method according to an illustrative embodiment.

FIG. 19 is a flow chart showing a subgroup paging method according to an illustrative embodiment.

FIG. 20 is a flow chart showing a subgroup paging method according to an illustrative embodiment.

FIG. 21 is a flow chart showing a subgroup paging method according to an illustrative embodiment.

FIG. 22 is a schematic diagram showing a subgroup paging apparatus according to an illustrative embodiment.

FIG. 23 is a schematic diagram showing a subgroup paging apparatus according to an illustrative embodiment.

FIG. 24 is a schematic diagram showing a subgroup paging apparatus according to an illustrative embodiment.

FIG. 25 is a schematic diagram showing a terminal according to an illustrative embodiment.

FIG. 26 is a block diagram showing a base station according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are merely for the purpose of describing specific embodiments, but should not be construed to limit the present disclosure. As used in the embodiments of the present disclosure and the appended claims, "a/an", and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are merely used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

For the purpose of brevity and ease of understanding, the terms "greater than" or "less than" are used herein when characterizing the relationship of magnitude. However, for those skilled in the art, it may be understood that the term "greater than" also covers the meaning of "greater than or equal to", and the term "less than" also covers the meaning of "less than or equal to".

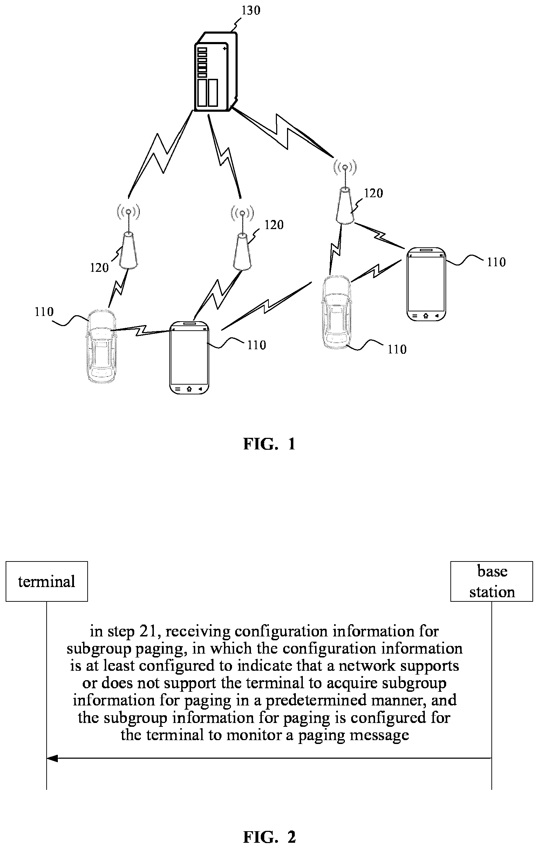

Referring to FIG. 1, FIG. 1 is a schematic diagram showing a wireless communication system provided in an embodiment of the present disclosure. As shown in FIG. 1, the wireless communication system is a communication system based on a cellular mobile communication technology, and may include several user equipments (UEs) 110 and several base stations 120.

The UE 110 may be a device that provides voice and/or data connectivity to a user. The UE 110 may communicate with one or more core networks via a radio access network (RAN). The UE 110 may be an Internet of Things user equipment, such as a sensor device, a mobile phone and a computer with an Internet of Things user equipment. For example, it may be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 110 may be a device of an unmanned aerial vehicle. Alternatively, the UE 110 may be a vehicle-mounted device, for example, a driving computer with a wireless communication function, or a wireless user equipment externally connected with a driving computer. Alternatively, the UE 110 may be a roadside device, such as a street lamp, a signal lamp or other roadside devices with a wireless communication function.

The base station 120 may be a network side device in the wireless communication system. The wireless communication system may be a $4^{th}$ generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN).

The base station 120 may be an evolved base station (eNB) used in the 4G system. Alternatively, the base station 120 may be a centralized distributed architecture base station (gNB) used in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 120 is not limited in the embodiments of the present disclosure.

A wireless connection may be established between the base station 120 and the UE 110 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In some embodiments, an end to end (E2E) connection may also be established between the UEs 110, for example, a vehicle to vehicle (V2V) communication, a vehicle to infrastructure (V2I) communication and a vehicle to pedestrian (V2P) communication in a vehicle to everything (V2X) communication.

Here, the above-mentioned UE may be regarded as a terminal device of the following embodiments.

In some embodiments, the wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 130 is not limited in the embodiment of the present disclosure.

In order to facilitate the understanding of those skilled in the art, embodiments of the present disclosure list multiple implementations to clearly illustrate the technical solutions of the embodiments of the present disclosure. Of course, those skilled in the art may understand that multiple embodiments provided in the embodiments of the present disclosure may be executed alone, may be executed together with the methods of other embodiments in the embodiments of the present disclosure, or may be executed alone or together with some methods in other related technologies, which is not limited in the embodiment of the present disclosure.

In order to better understand the technical solution described in any one of embodiments of the present disclosure, firstly, a scenario of a subgroup paging terminal in related technology is described.

In an embodiment, in case that no paging subgroup is performed, all terminals will be woken up at a paging occasion. In an embodiment, since a probability of the terminal being paged in a time period corresponding to the paging occasion is different, a terminal with a low paging probability will also be woken up by mistake, resulting in unnecessary power consumption. Therefore, it is necessary to perform a paging subgroup on the terminal and page the terminals in a paging subgroup manner. In an embodiment, subgroup information for paging may be carried in paging downlink control information (DCI), or may also be carried in paging early indication (PEI). No matter which subgrouping manner is adopted, the terminal and a network (including a base station and a core network) need to agree on a subgroup in which the terminal is located, so as to send a paging message to the terminal normally.

In an embodiment, a paging probability (Pnas) is pre-determined between the terminal and the core network, and the base station broadcasts information including a relationship between the probability and the paging subgroup, so that the terminal may determine the paging subgroup in which the terminal is located according to received information.

In an embodiment, when the core network sends the paging message to the base station, the core network may notify the base station of the paging probability of the terminal, so as to facilitate the base station to determine the paging subgroup of the terminal. In an embodiment, in case that the core network does not notify the base station of the paging probability of the terminal, the terminal may select a predetermined paging subgroup.

In an embodiment, a paging probability (Pnas) is pre-negotiated between the terminal and the core network, and the base station broadcasts a relationship between the Pnas and the subgroup, so that the terminal may determine the paging subgroup. When the paging message arrives at the base station from the core network, the core network may also notify the base station of the Pnas of the terminal, which is used for the base station to determine the subgroup of the terminal. In this way, the consistency in subgroup confirmation is achieved among three network elements of the terminal, the base station, and the core network.

In an embodiment, the base station corresponds part of the paging probability to a wake-up signal (WUS) subgroup set. After the terminal first selects a subgroup set, a subgroup is obtained in the subgroup set according to a UE-ID modulo manner, and the formula is:

$$wg = floor\left(floor\left(\frac{UE\_ID}{N \times N_s}\right)/N_n\right) \, mod \, N_w$$

where the *UE-ID* modulo manner is a random selection manner or a random allocation manner (randomization), $N$ is a paging frame density in a time domain, $Ns$ is a paging density in a paging frame in a time domain, $N_n$ is a paging narrowband, and $N_w$ is the total number of subgroups of WUS resources in the subgroup set.

In an embodiment, when the terminal is in a radio resource control inactive state, the terminal needs to monitor paging of the core network and paging of an access network at the same time. At this time, the paging of the core network is merely used in a special case that the network and the terminal are mismatched. For example, terminal context may be lost on a network side, and the network thinks that the terminal is already in a radio resource control idle state, so it initiates the paging of the core network. At this time, from the perspective of the terminal, the terminal is still in the radio resource control inactive state, and from the perspective of the network, the terminal is already in the radio resource control idle state.

In an embodiment, the core network allocates a subgroup identification (id1) to the terminal in the radio resource control idle state. After the terminal enters the radio resource control inactive state, the base station allocates a subgroup identification (id2) to a user in a radio resource control inactive state. Under normal circumstances, in case that there is no state mismatch mentioned above, the base station sends the paging message to the terminal according to the subgroup identification (id2), and the terminal monitors two types of paging under the subgroup identification (id2). However, when the terminal context may be lost on the network side (the subgroup identification (id2) maintained by the base station will no longer exist), the network thinks that the terminal is already in the radio resource control idle state, so it initiates the paging of the core network. At this time, the base station may use the subgroup identification (id1) carried in the paging message issued by the core network for paging. The terminal also uses the subgroup identification (id2) to monitor the subgroup. This may lead to a loss of paging.

As shown in FIG. 2, an embodiment of the present disclosure provides a subgroup paging method. The method is performed by a terminal, and the method includes a step as follows.

In step 21, configuration information for subgroup paging is received. The configuration information is at least configured to indicate that a network supports or does not support the terminal to acquire subgroup information for paging in a predetermined manner, and the subgroup information for paging is configured for the terminal to monitor a paging message.

Here, the terminal may be, but is not limited to, a mobile phone, a wearable device, a vehicle-mounted terminal, a road side unit (RSU), a smart home terminal, an industrial sensing device, and/or a medical device.

Here, the network may be an access network and/or a core network. A device in the access network may be a base station. A device in the core network may be a core network device. It is to be noted that the base station involved in the present disclosure may be an access device for a terminal to access a network. Here, the base station may be various types of base stations, for example, a base station of a third generation mobile communication (3G) network, a base station of a fourth generation mobile communication (4G) network, a base station of a fifth generation mobile communication (5G) network, or other evolved base stations.

In an embodiment, the subgroup paging may be dividing terminals into different subgroups. The network pages all terminals in a subgroup by sending a subgroup paging message, without sending a paging message separately for each terminal. After receiving the subgroup paging message, the terminal determines whether it belongs to a paged subgroup. In case that the terminal belongs to the paged subgroup, the terminal responds to the subgroup paging message. In case that the terminal does not belong to the paged subgroup, the terminal ignores the subgroup paging message.

In an embodiment, there may be multiple subgroups for subgroup paging. Here, different subgroups may be configured with different paging resources. The terminal may belong to one of the multiple subgroups. In response to the determination of a sub subgroup for paging to which the terminal belongs, the terminal may monitor the paging message on a paging resource indicated by the paging subgroup. Here, which subgroup the terminal belongs to may be determined by the base station or by a certain core network device in the core network. The subgroup described here is the paging subgroup. Here, the subgroup information for paging may be stored in the terminal in advance, or the network may send the subgroup information for paging to the terminal.

In an embodiment, the predetermined manner is a manner of receiving subgroup information for paging which is allocated by the network. The terminal receives the configuration information for the subgroup paging issued by the network. The configuration information is configured to indicate that the network supports or does not support the terminal to acquire the subgroup information for paging in the manner of receiving the subgroup information for paging which is allocated by the network. In response to the configuration information indicating that the network supports the terminal to acquire the subgroup information for paging in the manner of receiving the subgroup information for paging which is allocated by the network, the terminal may acquire the subgroup information for paging in the manner of receiving the subgroup information for paging which is allocated by the network. Alternatively, in response to the configuration information indicating that the network does not support the terminal to acquire the subgroup information for paging in the manner of receiving the subgroup information for paging which is allocated by the network, the terminal does not acquire the subgroup information for paging in the manner of receiving the subgroup information for paging which is allocated by the network.

In an embodiment, the predetermined manner is a manner of randomly selecting subgroup information for paging. The terminal receives the configuration information for the subgroup paging issued by the network. The configuration information is configured to indicate that the network supports or does not support the terminal to acquire the subgroup information for paging in the manner of randomly selecting the subgroup information for paging. In response to the configuration information indicating that the network supports the terminal to acquire the subgroup information for paging in the manner of randomly selecting the subgroup information for paging, the terminal may acquire the subgroup information for paging in the manner of randomly selecting the subgroup information for paging. Alternatively, in response to the configuration information indicating that the network does not support the terminal to acquire the subgroup information for paging in the manner of randomly selecting the subgroup information for paging, the terminal does not acquire the subgroup information for paging in the manner of randomly selecting the subgroup information for paging.

In an embodiment, the predetermined manner includes a manner of receiving subgroup information for paging which is allocated by the network and a manner of randomly selecting subgroup information for paging. The terminal receives the configuration information for the subgroup paging issued by the network. The configuration information is configured to indicate that the network supports or does not support the terminal to acquire the subgroup information for paging in the predetermined manner. In response to the fact that the network supports acquiring the subgroup information for paging in the manner of receiving the subgroup information for paging which is allocated by the network and supports acquiring the subgroup information for paging in the manner of randomly selecting the subgroup information for paging, the terminal may acquire the subgroup information for paging in the manner of receiving the subgroup information for paging which is allocated by the network or acquire the subgroup information for paging in the manner of randomly selecting the subgroup information for paging. Alternatively, in response to the fact that the network does not support acquiring the subgroup information for paging in the manner of receiving the subgroup information for paging which is allocated by the network but supports acquiring the subgroup information for paging in the manner of randomly selecting the subgroup information for paging, the terminal may acquire the subgroup information for paging in the manner of randomly selecting the subgroup information for paging. Alternatively, in response to the fact that the network supports acquiring the subgroup information for paging in the manner of receiving the subgroup information for paging which is allocated by the network but does not support acquiring the subgroup information for paging in the manner of randomly selecting the subgroup information for paging, the terminal may acquire the subgroup information for paging in the manner of receiving the subgroup information for paging which is allocated by the network. Alternatively, in response to the fact that the network neither supports acquiring the subgroup information for paging in the manner of receiving the subgroup information for paging which is allocated by the network nor supports acquiring the subgroup information for paging in the manner of randomly selecting the subgroup information for paging, the terminal may merely receive the paging message on a common paging resource. Here, the common paging resource may be a paging resource that is not used for the paging subgroup.

In an embodiment, which subgroup the terminal belongs to may be determined by the base station or a core network element. The terminal will send a capability of the terminal to support paging the terminal in a subgroup paging manner to the network. In an embodiment, the network will issue the configuration information for the subgroup paging to the terminal merely when the terminal has the capability to support paging the terminal in the subgroup paging manner. The terminal will receive the configuration information for the subgroup paging sent by the network. Otherwise, in case that the terminal does not have the capability to support paging the terminal in the subgroup paging manner, the network will not issue the configuration information for the subgroup paging to the terminal.

In an embodiment, the subgroup information for paging includes identification information of a subgroup for paging which is allocated by the network. The terminal may determine a subgroup in which the terminal is located according to the identification information. For example, when the identification information indicates "001", the terminal belongs to a first subgroup.

In an embodiment, the subgroup information for paging includes paging probability information of the terminal being paged, that is determined by the network. The terminal may determine a subgroup to which the terminal belongs according to the probability information of the terminal being paged. In an embodiment, in response to a probability of the terminal being paged being less than a probability threshold, it is determined that the terminal belongs to a first subgroup. Alternatively, in response to a probability of the terminal being paged being greater than a probability threshold, it is determined that the terminal belongs to a second subgroup. Here, paging resources configured by the first subgroup and the second subgroup are different.

In an embodiment, the subgroup information for paging includes probability level information of a paging probability of the terminal being paged, that is determined by the network. The terminal may determine a subgroup to which the terminal belongs according to the probability level information of the probability of the terminal being paged. In an embodiment, a probability level of the probability of the terminal being paged may be divided into a low level, a medium level, and a high level. In an embodiment, in response to the probability level of the probability of the terminal being paged being the low level, it is determined that a subgroup to which the terminal belongs is a first subgroup. In response to the probability level of the probability of the terminal being paged being the medium level, it is determined that a subgroup to which the terminal belongs is a second subgroup. In response to the probability level of the probability of the terminal being paged being the high level, it is determined that a subgroup to which the terminal belongs is a third subgroup. Here, paging resources configured by the first subgroup, the second subgroup and the third subgroup are different. Here, it is to be noted that different probability levels correspond to different probability ranges. For example, a probability corresponding to the low level is $a$ to $b$, a probability corresponding to the middle level is $c$ to $d$, and a probability corresponding to the high level is $e$ to $f$. Here, $a$ is less than $b$, $b$ is less than $c$, $c$ is less than $d$, $d$ is less than $e$, and $e$ is less than $f$.

In the embodiment of the present disclosure, the configuration information for the subgroup paging is received. The configuration information is at least configured to indicate that the network supports or does not support the terminal to acquire the subgroup information for paging in the predetermined manner, and the subgroup information for paging is configured for the terminal to monitor the paging message. Here, after receiving the configuration information for the subgroup paging, the terminal may determine, according to the configuration information, that the network supports or does not support the terminal to acquire the subgroup information for paging in the predetermined manner. The case of paging failure may be reduced compared to a way in which the subgroup information for paging is always acquired in the predetermined manner without determining whether the network supports the predetermined manner, which may improve the reliability of the network paging the terminal in a subgroup paging manner.

It is to be noted that those skilled in the art may understand that the methods provided in the embodiments of the present disclosure may be executed alone, or may be executed together with some methods in the embodiments of the present disclosure or some methods in related technologies.

In an embodiment, the predetermined manner includes one or more of a first predetermined manner being a manner of receiving subgroup information for paging which is allocated by the network, or a second predetermined manner being a manner of randomly selecting subgroup information for paging.

In an embodiment, the first predetermined manner is indicated by a first identification. The second predetermined manner is indicated by a second identification. For example, in case that a value of the first identification carried in the configuration information is a first value, it indicates that the network supports the terminal to acquire the subgroup information for paging in the first predetermined manner. Alternatively, in case that a value of the first identification carried in the configuration information is a second value, it indicates that the network does not support the terminal to acquire the subgroup information for paging in the first predetermined manner. In case that a value of the second identification carried in the configuration information is a first value, it indicates that the network supports the terminal to acquire the subgroup information for paging in the second predetermined manner. Alternatively, in case that a value of the second identification carried in the configuration information is a second value, it indicates that the network does not support the terminal to acquire the subgroup information for paging in the second predetermined manner.

In an embodiment, the first predetermined manner and the second predetermined manner are indicated by a first identification. For example, in case that a value of the first identification carried in the configuration information is a first value, it indicates that the network supports the terminal to acquire the subgroup information for paging in the first predetermined manner and the second predetermined manner. Alternatively, in case that a value of the first identification carried in the configuration information is a second value, it indicates that the network does not support the terminal to acquire the subgroup information for paging in the first predetermined manner or the second predetermined manner. Alternatively, in case that a value of the first identification carried in the configuration information is a third value, it indicates that the network supports the terminal to acquire the subgroup information for paging in the first predetermined manner, but does not support the terminal to acquire the subgroup information for paging in the second predetermined manner. Alternatively, in case that a value of the first identification carried in the configuration information is a fourth value, it indicates that the network supports the terminal to acquire the subgroup information for paging in the first predetermined manner, but does not support the terminal to acquire the subgroup information for paging in the second predetermined manner. In an embodiment, the configuration information is configured to indicate that the network supports the terminal to acquire the subgroup information for paging in the first predetermined manner and also supports the terminal to acquire the subgroup information for paging in the second predetermined manner. In this way, the terminal may acquire the subgroup information for paging in the first predetermined manner or acquire the subgroup information for paging in the second predetermined manner.

In an embodiment, the configuration information is configured to indicate that the network merely supports the terminal to acquire the subgroup information for paging in the first predetermined manner but does not support the terminal to acquire the subgroup information for paging in the second predetermined manner. In this way, the terminal may acquire the subgroup information for paging in the first predetermined manner but cannot acquire the subgroup information for paging in the second predetermined manner.

In an embodiment, the configuration information is configured to indicate that the network does not support the terminal to acquire the subgroup information for paging in the first predetermined manner but supports the terminal to acquire the subgroup information for paging in the second predetermined manner. In this way, the terminal may acquire the subgroup information for paging in the second predetermined manner but cannot acquire the subgroup information for paging in the first predetermined manner.

In an embodiment, the configuration information is configured to indicate that the network neither supports the terminal to acquire the subgroup information for paging in the first predetermined manner nor supports the terminal to acquire the subgroup information for paging in the second predetermined manner. In this way, the terminal may acquire predetermined subgroup information for paging. Here, the predetermined subgroup information for paging may indicate that the terminal monitors the paging message on the common paging resource.

In an embodiment, the subgroup information for paging includes one or more of identification information of a subgroup for paging which is allocated by the network, paging probability information of the terminal being paged, that is determined by the network, or probability level information of a paging probability of the terminal being paged, that is determined by the network.

In an embodiment, the subgroup information for paging may be acquired in the first predetermined manner or in the second predetermined manner. The first predetermined manner is the manner of receiving the subgroup information for paging which is allocated by the network. The second predetermined manner is the manner of randomly selecting the subgroup information for paging.

In an embodiment, the subgroup information for paging includes the identification information of the paging subgroup allocated by the network. The terminal may determine a subgroup in which the terminal is located according to the identification information.

In another embodiment, the subgroup information for paging includes the paging probability information of the terminal being paged, that is determined by the network. The terminal may determine a subgroup to which the terminal belongs according to the probability information of the terminal being paged. In an embodiment, in response to a probability of the terminal being paged being less than a probability threshold, it is determined that the terminal belongs to a first subgroup. Alternatively, in response to a probability of the terminal being paged being greater than a probability threshold, it is determined that the terminal belongs to a second subgroup. Here, paging resources configured by the first subgroup and the second subgroup are different.

In yet another embodiment, the subgroup information for paging includes probability level information of a paging probability of the terminal being paged, that is determined by the network. The terminal may determine a subgroup to which the terminal belongs according to the probability level information of the probability of the terminal being paged. In an embodiment, a probability level of the probability of the terminal being paged may be divided into a low level, a medium level and a high level. In an embodiment, in response to the probability level of the probability of the terminal being paged being the low level, it is determined that a subgroup to which the terminal belongs is a first subgroup. In response to the probability level of the probability of the terminal being paged being the medium level, it is determined that a subgroup to which the terminal belongs is a second subgroup. In response to the probability level of the probability of the terminal being paged being the high level, it is determined that a subgroup to which the terminal belongs is a third subgroup. Here, paging resources configured by the first subgroup, the second subgroup and the third subgroup are different.

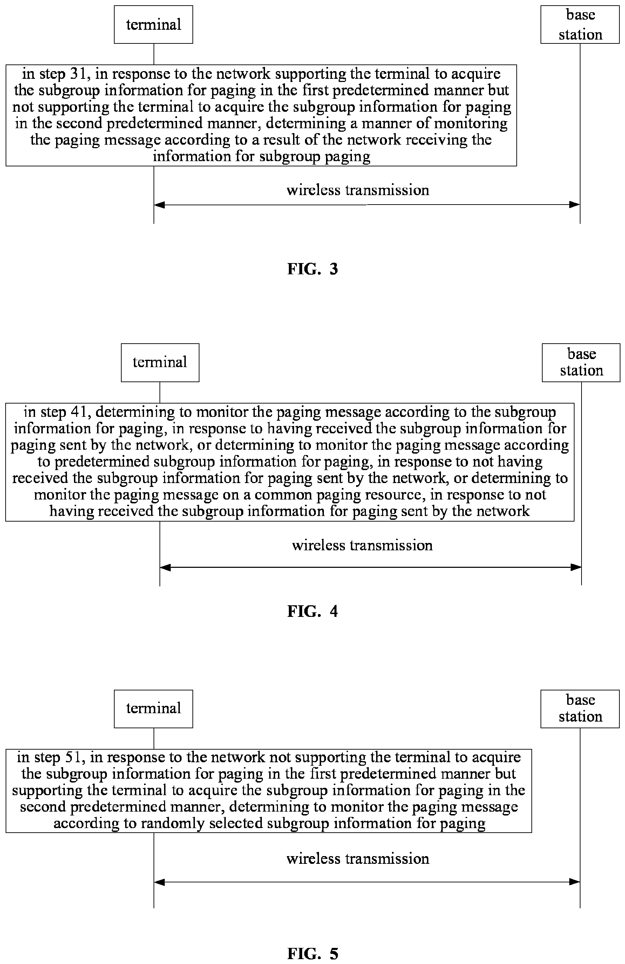

As shown in FIG. 3, an embodiment of the present disclosure provides a subgroup paging method. The method is performed by a terminal, and the method includes a step as follows.

In step 31, a manner of monitoring the paging message is determined according to a result of the network receiving the information for subgroup paging, in response to the network supporting the terminal to acquire the subgroup information for paging in the first predetermined manner but not supporting the terminal to acquire the subgroup information for paging in the second predetermined manner.

In an embodiment, the first predetermined manner is the manner of receiving the subgroup information for paging which is allocated by the network. The second predetermined manner is the manner of randomly selecting the subgroup information for paging.

Here, the result of the network receiving the information for subgroup paging may be that the subgroup information for paging sent by the network is received or the subgroup information for paging sent by the network is not received.

That is, in the above-mentioned embodiment, when it is clear that the network supports the first predetermined manner but does not support the second predetermined manner, a corresponding operation is performed according to the first predetermined manner.

Further, step 31 may be that the network supports the terminal in the first predetermined manner, and the manner of monitoring the paging message is determined according to the result of the network receiving the information for subgroup paging.

In an embodiment, the first predetermined manner is the manner of receiving the subgroup information for paging which is allocated by the network.

That is, in the above-mentioned embodiment, as long as it is determined that the network supports the first predetermined manner (the manner of receiving the subgroup information for paging which is allocated by the network), a corresponding operation is performed according to the first predetermined manner (the manner of receiving the subgroup information for paging which is allocated by the network).

In an embodiment, the configuration information for the subgroup paging is received. The configuration information is at least configured to indicate that the network supports the terminal to acquire the subgroup information for paging in the first predetermined manner but does not support the terminal to acquire the subgroup information for paging in the second predetermined manner. Alternatively, the configuration information is at least configured to indicate that the network supports the terminal in the first predetermined manner. In response to having received the subgroup information for paging sent by the network, it is determined to monitor the paging message according to received subgroup information for paging.

In an embodiment, the configuration information for the subgroup paging is received. The configuration information is at least configured to indicate that the network supports the terminal to acquire the subgroup information for paging in the first predetermined manner but does not support the terminal to acquire the subgroup information for paging in the second predetermined manner. Alternatively, the configuration information is at least configured to indicate that the network supports the terminal in the first predetermined manner. In response to not having received the subgroup information for paging sent by the network, it is determined to monitor the paging message according to the predetermined subgroup information for paging. In an embodiment, the configuration information for the subgroup paging is received. The configuration information is at least configured to indicate that the network supports the terminal to acquire the subgroup information for paging in the first predetermined manner but does not support the terminal to acquire the subgroup information for paging in the second predetermined manner. Alternatively, the configuration information is at least configured to indicate that the network supports the terminal in the first predetermined manner. In response to not having received the subgroup information for paging sent by the network, it is determined to monitor the paging message on the common paging resource. Here, the common paging resource may be a paging resource that is not used for a paging subgroup.

It is to be noted that those skilled in the art may understand that the methods provided in the embodiments of the present disclosure may be executed alone, or may be executed together with some methods in the embodiments of the present disclosure or some methods in related technologies.

As shown in FIG. 4, an embodiment of the present disclosure provides a subgroup paging method. The method is performed by a terminal, and the method includes a step as follows.

In step 41, it is determined to monitor the paging message according to the subgroup information for paging, in response to having received the subgroup information for paging sent by the network, or it is determined to monitor the paging message according to predetermined subgroup information for paging, in response to not having received the subgroup information for paging sent by the network, or it is determined to monitor the paging message on a common paging resource, in response to not having received the subgroup information for paging sent by the network.

In an embodiment, the configuration information for the subgroup paging is received. The configuration information is at least configured to indicate that the network supports the terminal to acquire the subgroup information for paging in the first predetermined manner but does not support the terminal to acquire the subgroup information for paging in the second predetermined manner. In response to having received the subgroup information for paging sent by the network, it is determined to monitor the paging message according to the subgroup information for paging.

In an embodiment, the first predetermined manner is the manner of receiving the subgroup information for paging which is allocated by the network. The second predetermined manner is the manner of randomly selecting the subgroup information for paging.

In an embodiment, the configuration information for the subgroup paging is received. The configuration information is at least configured to indicate that the network supports the terminal to acquire the subgroup information for paging in the first predetermined manner but does not support the terminal to acquire the subgroup information for paging in the second predetermined manner. In response to not having received the subgroup information for paging sent by the network, it is determined to monitor the paging message according to the predetermined subgroup information for paging.

In an embodiment, the configuration information for the subgroup paging is received. The configuration information is at least configured to indicate that the network supports the terminal to acquire the subgroup information for paging in the first predetermined manner but does not support the terminal to acquire the subgroup information for paging in the second predetermined manner. In response to not having received the subgroup information for paging sent by the network, it is determined to monitor the paging message on the common paging resource. Here, the common paging resource may be a paging resource that is not used for a paging subgroup.

It is to be noted that those skilled in the art may understand that the methods provided in the embodiments of the present disclosure may be executed alone, or may be executed together with some methods in the embodiments of the present disclosure or some methods in related technologies.

As shown in FIG. 5, an embodiment of the present disclosure provides a subgroup paging method. The method is performed by a terminal, and the method includes a step as follows.

In step 51, it is determined to monitor the paging message according to randomly selected subgroup information for paging, in response to the network not supporting the terminal to acquire the subgroup information for paging in the first predetermined manner but supporting the terminal to acquire the subgroup information for paging in the second predetermined manner.

That is, in the above-mentioned embodiment, as long as it is determined that the network does not support the first predetermined manner (the manner of receiving the subgroup information for paging which is allocated by the network) but supports the second predetermined manner (the manner of randomly selecting the subgroup information for paging), a corresponding operation is performed according to the second predetermined manner (the manner of randomly selecting the subgroup information for paging).

Further, step 51 may be that in response to the network not supporting the terminal in the first predetermined manner, it is determined to monitor the paging message according to the randomly selected subgroup information for paging or monitor the paging message on the common paging resource.

In an embodiment, the first predetermined manner is the manner of receiving the subgroup information for paging which is allocated by the network.

That is, in the above-mentioned embodiment, as long as it is determined that the network does not support the first predetermined manner (the manner of receiving the subgroup information for paging which is allocated by the network) but supports the second predetermined manner (the manner of randomly selecting the subgroup information for paging), the paging message is monitored in the second predetermined manner (the manner of randomly selecting the subgroup information for paging) or on the common paging resource. That is, it is determined which manner is adopted based on other configurations or conditions.

In an embodiment, the first predetermined manner is the manner of receiving the subgroup information for paging which is allocated by the network. The second predetermined manner is the manner of randomly selecting the subgroup information for paging.

In an embodiment, the configuration information for the subgroup paging is received. The configuration information is at least configured to indicate that the network does not support the terminal to acquire the subgroup information for paging in the first predetermined manner but supports the terminal to acquire the subgroup information for paging in the second predetermined manner. In response to the network not supporting the terminal to acquire the subgroup information for paging in the first predetermined manner but supporting the terminal to acquire the subgroup information for paging in the second predetermined manner, it is determined to monitor the paging message according to the randomly selected subgroup information for paging.

In an embodiment, a manner of the subgroup information for paging randomly selected by the terminal can be obtained by:

$$wg = floor\left(floor\left(\frac{UE\_ID}{N \times N_s}\right)/N_n\right) \bmod N_w$$

where $N$ is a paging frame density in a time domain, $Ns$ is a paging density in a paging frame in a time domain, $N_n$ is a paging narrowband, and $N_w$ is the total number of subgroups of WUS resources in the subgroup set. $W_g$ is a selected paging subgroup. $UE\_ID$ is a random allocation manner.

In an embodiment, the base station corresponds part of the paging probability to a WUS subgroup set. After selecting a subgroup set, the terminal acquires a paging subgroup in a random selection manner.

It is to be noted that those skilled in the art may understand that the methods provided in the embodiments of the present disclosure may be executed alone, or may be executed together with some methods in the embodiments of the present disclosure or some methods in related technologies.

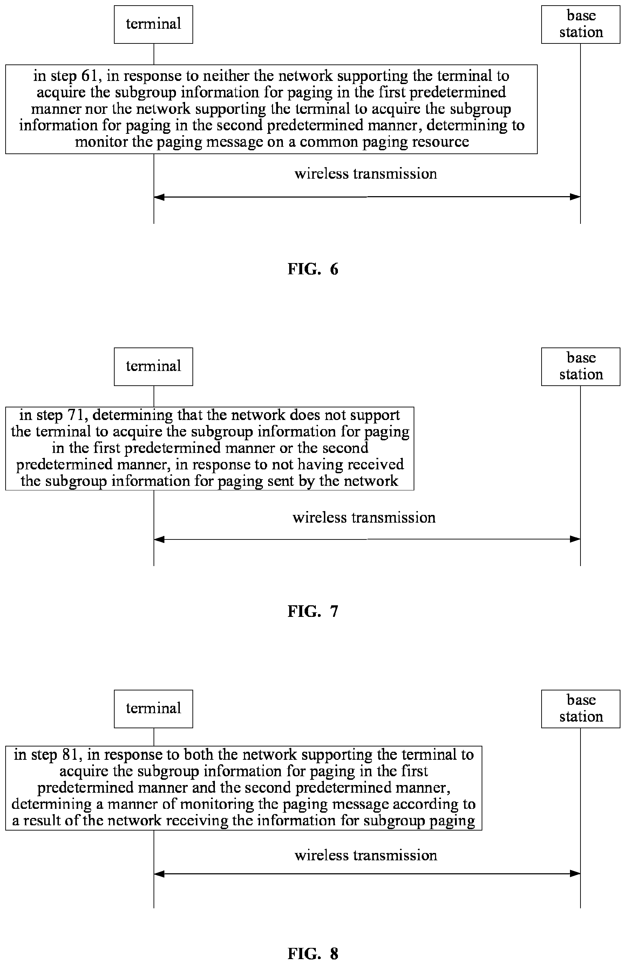

As shown in FIG. 6, an embodiment of the present disclosure provides a subgroup paging method. The method is performed by a terminal, and the method includes a step as follows.

In step 61, it is determined to monitor the paging message on a common paging resource, in response to neither the network supporting the terminal to acquire the subgroup information for paging in the first predetermined manner nor the network supporting the terminal to acquire the subgroup information for paging in the second predetermined manner.

In an embodiment, the first predetermined manner is the manner of receiving the subgroup information for paging which is allocated by the network. The second predetermined manner is the manner of randomly selecting the subgroup information for paging.

In an embodiment, the configuration information for the subgroup paging is received. The configuration information is at least configured to indicate that the network does not support the terminal to acquire the subgroup information for paging in the first predetermined manner or the second predetermined manner. In response to neither the network supporting the terminal to acquire the subgroup information for paging in the first predetermined manner nor the network supporting the terminal to acquire the subgroup information for paging in the second predetermined manner, it is determined to monitor the paging message on the common paging resource.

In an embodiment, the common paging resources may be a paging resource that is not used for a paging subgroup.

In an embodiment, in response to not having received the subgroup information for paging sent by the network, it is determined that the network does not support the terminal to acquire the subgroup information for paging in the first predetermined manner or the second predetermined manner.

It is to be noted that those skilled in the art may understand that the methods provided in the embodiments of the present disclosure may be executed alone, or may be executed together with some methods in the embodiments of the present disclosure or some methods in related technologies.

As shown in FIG. 7, an embodiment of the present disclosure provides a subgroup paging method. The method is performed by a terminal, and the method includes a step as follows.

In step 71, it is determined that the network does not support the terminal to acquire the subgroup information for paging in the first predetermined manner or the second predetermined manner, in response to not having received the subgroup information for paging sent by the network.

In an embodiment, the first predetermined manner is the manner of receiving the subgroup information for paging which is allocated by the network. The second predetermined manner is the manner of randomly selecting the subgroup information for paging.

In some embodiments, "not receiving the subgroup information for paging sent by the network" means that the information is not received or decoded successfully.

In an embodiment, in response to not having received the subgroup information for paging sent by the network within a predetermined time period, it is determined that the network does not support the terminal to acquire the subgroup information for paging in the first predetermined manner or the second predetermined manner.

In an embodiment, it may be determined that the network does not support the terminal to acquire the subgroup information for paging in the first predetermined manner or the second predetermined manner, in response to not having received the subgroup information for paging sent by the network within a predetermined time period after receiving the configuration information. The configuration information is at least configured to indicate that the network does not support the terminal to acquire the subgroup information for paging in the first predetermined manner or the second predetermined manner. The subgroup information for paging is configured for the terminal to monitor the paging message.

It is to be noted that those skilled in the art may understand that the methods provided in the embodiments of the present disclosure may be executed alone, or may be executed together with some methods in the embodiments of the present disclosure or some methods in related technologies.

As shown in FIG. 8, an embodiment of the present disclosure provides a subgroup paging method. The method is performed by a terminal, and the method includes a step as follows.

In step 81, a manner of monitoring the paging message is determined according to a result of the network receiving the information for subgroup paging, in response to both the network supporting the terminal to acquire the subgroup information for paging in the first predetermined manner and the second predetermined manner,.

In an embodiment, the first predetermined manner is the manner of receiving the subgroup information for paging which is allocated by the network. The second predetermined manner is the manner of randomly selecting the subgroup information for paging.

In an embodiment, the configuration information for the subgroup paging is received. The configuration information is at least configured to indicate that the network support the terminal to acquire the subgroup information for paging in the first predetermined manner and the second predetermined manner. In response to both the network supporting the terminal to acquire the subgroup information for paging in the first predetermined manner and the second predetermined manner, the manner of monitoring the paging message is determined according to the result of the network receiving the information for subgroup paging.

In an embodiment, determining the manner of monitoring the paging message according to the result of the network receiving the information for subgroup paging includes determining to monitor the paging message according to the subgroup information for paging, in response to having received the subgroup information for paging sent by the network, or determining to monitor the paging message according to randomly selected subgroup information for paging, in response to not having received the subgroup information for paging sent by the network.

In an embodiment, in response to having received the subgroup information for paging within a predetermined time period, it is determined that the subgroup information for paging sent by the network is received. In response to not having received the subgroup information for paging within a predetermined time period, it is determined that the subgroup information for paging sent by the network is not received.

In an embodiment, in response to having received the subgroup information for paging within a predetermined time period after receiving the configuration information, it is determined that the subgroup information for paging sent by the network is received. In response to not having received the subgroup information for paging within a predetermined time period after receiving the configuration information, it is determined that the subgroup information for paging sent by the network is not received.

In an embodiment, there may be multiple subgroups for subgroup paging. Here, different subgroups may be configured with different paging resources. A terminal may belong to a certain subgroup in the multiple subgroups. The terminal may determine a paging subgroup to which the terminal belongs according to the subgroup information for paging. In response to the determination of the paging subgroup to which the terminal belongs, the terminal may monitor the paging message on the paging resource indicated by the paging subgroup.

It is to be noted that those skilled in the art may understand that the methods provided in the embodiments of the present disclosure may be executed alone, or may be executed together with some methods in the embodiments of the present disclosure or some methods in related technologies.

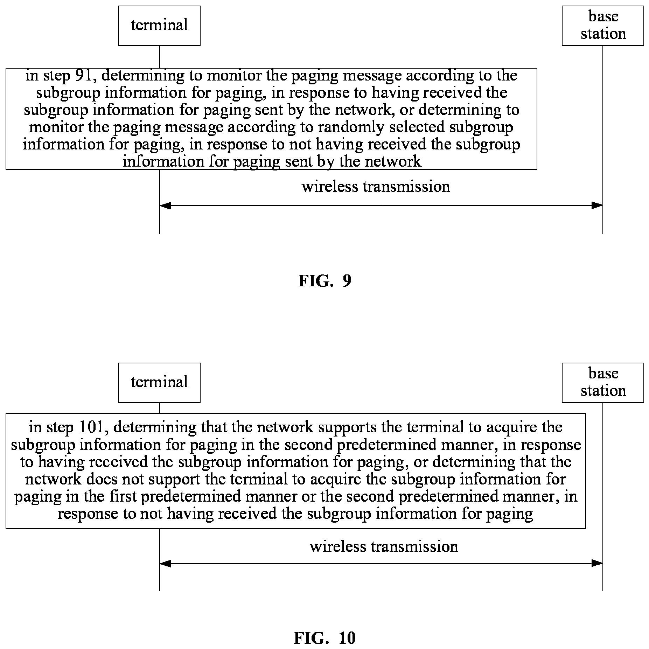

As shown in FIG. 9, an embodiment of the present disclosure provides a subgroup paging method. The method is performed by a terminal, and the method includes a step as follows.

In step 91, it is determined to monitor the paging message according to the subgroup information for paging, in response to having received the subgroup information for paging sent by the network, or it is determined to monitor the paging message according to randomly selected subgroup information for paging, in response to not having received the subgroup information for paging sent by the network.

In an embodiment, the first predetermined manner is the manner of receiving the subgroup information for paging which is allocated by the network. The second predetermined manner is the manner of randomly selecting the subgroup information for paging.

In an embodiment, the configuration information for the subgroup paging is received. The configuration information is at least configured to indicate that the network support the terminal to acquire the subgroup information for paging in the first predetermined manner and the second predetermined manner. In response to in response to both the network supporting the terminal to acquire the subgroup information for paging in the first predetermined manner and the second predetermined manner, the manner of monitoring the paging message is determined according to the result of the network receiving the information for subgroup paging.

In an embodiment, determining the manner of monitoring the paging message according to the result of the network receiving the information for subgroup paging includes determining to monitor the paging message according to the subgroup information for paging, in response to having received the subgroup information for paging sent by the network, or determining to monitor the paging message according to the randomly selected subgroup information for paging, in response to not having received the subgroup information for paging sent by the network.

In an embodiment, in response to having received the subgroup information for paging within a predetermined time period, it is determined that the subgroup information for paging sent by the network is received. In response to not having received the subgroup information for paging within a predetermined time period, it is determined that the subgroup information for paging sent by the network is not received. In an embodiment, in response to having received the subgroup information for paging within a predetermined time period after receiving the configuration information, it is determined that the subgroup information for paging sent by the network is received. In response to not having received the subgroup information for paging within a predetermined time period after receiving the configuration information, it is determined that the subgroup information for paging sent by the network is not received.

In an embodiment, there may be multiple subgroups for subgroup paging. Here, different subgroups may be configured with different paging resources. A terminal may belong to a certain subgroup in the multiple subgroups. The terminal may determine a paging subgroup to which the terminal belongs according to the subgroup information for paging. In response to the determination of the paging subgroup to which the terminal belongs, the terminal may monitor the paging message on the paging resource indicated by the paging subgroup.

It is to be noted that those skilled in the art may understand that the methods provided in the embodiments of the present disclosure may be executed alone, or may be executed together with some methods in the embodiments of the present disclosure or some methods in related technologies.

As shown in FIG. 10, an embodiment of the present disclosure provides a subgroup paging method. The method is performed by a terminal, and the method includes a step as follows.

In step 101, it is determined that the network supports the terminal to acquire the subgroup information for paging in the second predetermined manner, in response to having received the subgroup information for paging, or it is determined that the network does not support the terminal to acquire the subgroup information for paging in the first predetermined manner or the second predetermined manner, in response to not having received the subgroup information for paging.

In an embodiment, the first predetermined manner is the manner of receiving the subgroup information for paging which is allocated by the network. The second predetermined manner is the manner of randomly selecting the subgroup information for paging.

In an embodiment, in response to having received the subgroup information for paging within a predetermined time period, it is determined that the subgroup information for paging sent by the network is received. In response to not having received the subgroup information for paging within a predetermined time period, it is determined that the subgroup information for paging sent by the network is not received. In an embodiment, in response to having received the subgroup information for paging within a predetermined time period after receiving the configuration information, it is determined that the subgroup information for paging sent by the network is received. In response to not having received the subgroup information for paging within a predetermined time period after receiving the configuration information, it is determined that the subgroup information for paging sent by the network is not received.

In an embodiment, in response to having received the configuration information carrying the subgroup information for paging, it is determined that the subgroup information for paging sent by the network is received. In response to not having received the configuration information carrying the subgroup information for paging, it is determined that the subgroup information for paging sent by the network is not received.

It is to be noted that those skilled in the art may understand that the methods provided in the embodiments of the present disclosure may be executed alone, or may be executed together with some methods in the embodiments of the present disclosure or some methods in related technologies.

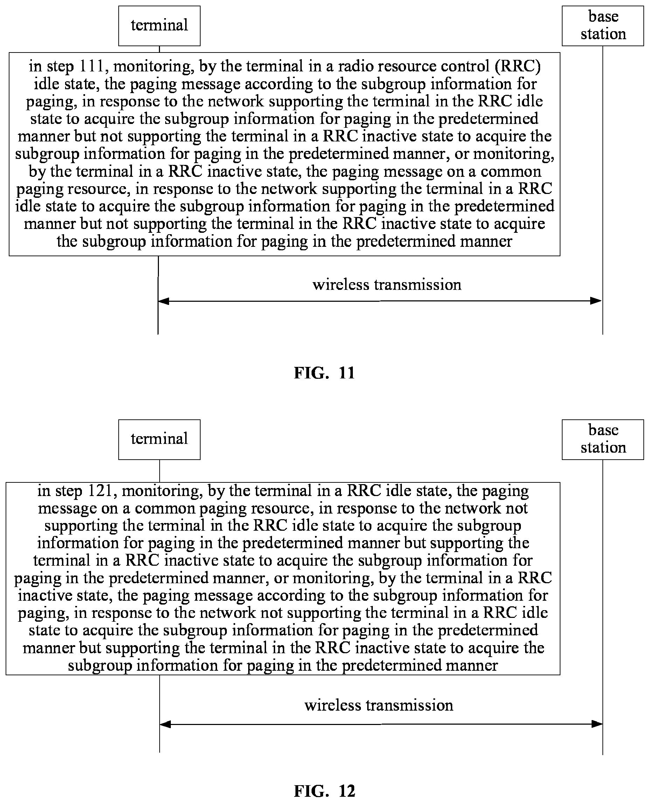

As shown in FIG. 11, an embodiment of the present disclosure provides a subgroup paging method. The method is performed by a terminal, and the method includes a step as follows.

In step 111, the terminal in a radio resource control (RRC) idle state monitors the paging message according to the subgroup information for paging, in response to the network supporting the terminal in the RRC idle state to acquire the subgroup information for paging in the predetermined manner but not supporting the terminal in a RRC inactive state to acquire the subgroup information for paging in the predetermined manner, or the terminal in a RRC inactive state monitors the paging message on a common paging resource, in response to the network supporting the terminal in a RRC idle state to acquire the subgroup information for paging in the predetermined manner but not supporting the terminal in the RRC inactive state to acquire the subgroup information for paging in the predetermined manner, or the terminal in a radio resource control (RRC) idle state monitors the paging message according to the subgroup information for paging, in response to the network supporting the terminal in the RRC idle state to acquire the subgroup information for paging in the predetermined manner, or the terminal in a RRC idle state monitors the paging message according to the subgroup information for paging, in response to the network not supporting the terminal in a RRC inactive state to acquire the subgroup information for paging in the predetermined manner, or the terminal in a RRC inactive state monitors the paging message on the common paging resource, in response to the network not supporting the terminal in the RRC inactive state to acquire the subgroup information for paging in the predetermined manner.

In an embodiment, in response to the network supporting the terminal in the RRC idle state to acquire the subgroup information for paging in the predetermined manner but not supporting the terminal in the RRC inactive state to acquire the subgroup information for paging in the predetermined manner, the configuration information received by the terminal carries a first identification. In response to the terminal determining that the configuration information carries the first identification, the terminal in RRC idle state monitors the paging message according to the subgroup information for paging.

In an embodiment, in response to the network supporting the terminal in the RRC idle state to acquire the subgroup information for paging in the predetermined manner but not supporting the terminal in the RRC inactive state to acquire the subgroup information for paging in the predetermined manner, the configuration information received by the terminal carries a first identification and a second identification. The first identification indicates that the network supports the terminal in the RRC idle state to acquire the subgroup information for paging in the predetermined manner. The second identification indicates that the network does not support the terminal in the RRC inactive state to acquire the subgroup information for paging in the predetermined manner. In response to the terminal determining that the configuration information carries the first identification and the second identification, the terminal in the RRC idle state monitors the paging message according to the subgroup information for paging.

In an embodiment, in response to the network supporting the terminal in the RRC idle state to acquire the subgroup information for paging in the predetermined manner but not supporting the terminal in the RRC inactive state to acquire the subgroup information for paging in the predetermined manner, the configuration information received by the terminal carries a second identification. In response to the terminal determining that the configuration information carries the second identification, the terminal in the RRC inactive state monitors the paging message on the common paging resource. Here, the common paging resource may be a paging resource that is not used for a paging subgroup.

In an embodiment, in response to the network supporting the terminal in the RRC idle state to acquire the subgroup information for paging in the predetermined manner but not supporting the terminal in the RRC inactive state to acquire the subgroup information for paging in the predetermined manner, the configuration information received by the terminal carries a first identification and a second identification. The first identification indicates that the network supports the terminal in the RRC idle state to acquire the subgroup information for paging in the predetermined manner. The second identification indicates that the network does not support the terminal in the RRC inactive state to acquire the subgroup information for paging in the predetermined manner. In response to the terminal determining that the configuration information carries the first identification and the second identification, the terminal in the RRC inactive state monitors the paging message on the common paging resource. Here, the common paging resource may be a paging resource that is not used for a paging subgroup.

It is to be noted that those skilled in the art may understand that the methods provided in the embodiments of the present disclosure may be executed alone, or may be executed together with some methods in the embodiments of the present disclosure or some methods in related technologies.

As shown in FIG. 12, an embodiment of the present disclosure provides a subgroup paging method. The method is performed by a terminal, and the method includes a step as follows.

In step 121, the terminal in a RRC idle state monitors the paging message on a common paging resource, in response to the network not supporting the terminal in the RRC idle state to acquire the subgroup information for paging in the predetermined manner but supporting the terminal in a RRC inactive state to acquire the subgroup information for paging in the predetermined manner, or the terminal in a RRC inactive state monitors the paging message according to the subgroup information for paging, in response to the network not supporting the terminal in a RRC idle state to acquire the subgroup information for paging in the predetermined manner but supporting the terminal in the RRC inactive state to acquire the subgroup information for paging in the predetermined manner, or the terminal in a RRC idle state monitors the paging message on a common paging resource, in response to the network not supporting the terminal in the RRC idle state to acquire the subgroup information for paging in the predetermined manner, or the terminal in a RRC idle state monitors the paging message on a common paging resource, in response to the network supporting the terminal in a RRC inactive state to acquire the subgroup information for paging in the predetermined manner, or the terminal in a RRC inactive state monitors the paging message according to the subgroup information for paging, in response to the network not supporting the terminal in a RRC idle state to acquire the subgroup information for paging in the predetermined manner, or the terminal in a RRC inactive state monitors the paging message according to the subgroup information for paging, in response to the network supporting the terminal in the RRC inactive state to acquire the subgroup information for paging in the predetermined manner.

In an embodiment, in response to the network not supporting the terminal in the RRC idle state to acquire the subgroup information for paging in the predetermined manner but supporting the terminal in the RRC inactive state to acquire the subgroup information for paging in the predetermined manner, the configuration information received by the terminal carries a first identification. In response to determining that the configuration information carries the first identification, the terminal in the RRC idle state monitors the paging message on the common paging resource.

In an embodiment, in response to the network not supporting the terminal in the RRC idle state to acquire the subgroup information for paging in the predetermined manner but supporting the terminal in the RRC inactive state to acquire the subgroup information for paging in the predetermined manner, the configuration information received by the terminal carries a first identification and a second identification. The first identification is configured to indicate that the network does not support the terminal in the RRC idle state to acquire the subgroup information for paging in the predetermined manner. The second identification is configured to indicate that the network supports the terminal in the RRC inactive state to acquire the subgroup information for paging in the predetermined manner. In response to the terminal determining that the configuration information carries the first identification and the second identification, the terminal in the RRC idle state monitors the paging message on the common paging resource.

In an embodiment, in response to the network not supporting the terminal in the RRC idle state to acquire the subgroup information for paging in the predetermined manner but supporting the terminal in the RRC inactive state to acquire the subgroup information for paging in the predetermined manner, the configuration information received by the terminal carries a second identification. In response to determining that the configuration information carries the second identification, the terminal in the RRC inactive state monitors the paging message according to the subgroup information for paging.

In an embodiment, in response to the network not supporting the terminal in the RRC idle state to acquire the subgroup information for paging in the predetermined manner but supporting the terminal in the RRC inactive state to acquire the subgroup information for paging in the predetermined manner, the configuration information received by the terminal carries a first identification and a second identification. The first identification is configured to indicate that the network does not support the terminal in the RRC idle state to acquire the subgroup information for paging in the predetermined manner. The second identification is configured to indicate that the network supports the terminal in the RRC inactive state to acquire the subgroup information for paging in the predetermined manner. In response to the terminal determining that the configuration information carries the first identification and the second identification, the terminal in the RRC inactive state monitors the paging message according to the subgroup information for paging.

It is to be noted that those skilled in the art may understand that the methods provided in the embodiments of the present disclosure may be executed alone, or may be executed together with some methods in the embodiments of the present disclosure or some methods in related technologies.

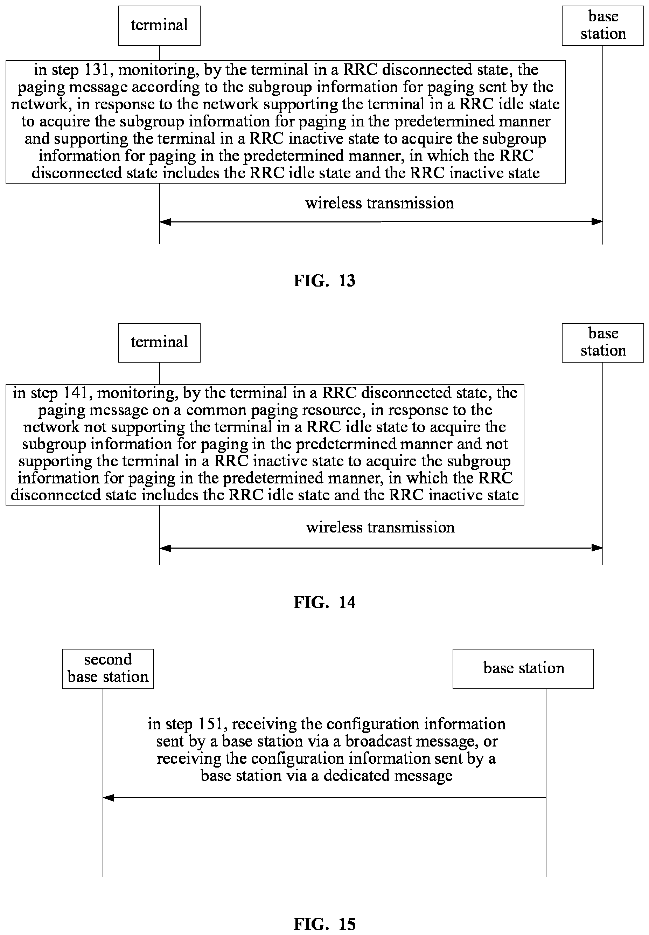

As shown in FIG. 13, an embodiment of the present disclosure provides a subgroup paging method. The method is performed by a terminal, and the method includes a step as follows.

In step 131, the terminal in a RRC disconnected state monitors the paging message according to the subgroup information for paging, in response to the network supporting the terminal in a RRC idle state to acquire the subgroup information for paging in the predetermined manner and supporting the terminal in a RRC inactive state to acquire the subgroup information for paging in the predetermined manner. The RRC disconnected state includes the RRC idle state and the RRC inactive state.

In an embodiment, in response to the network supporting the terminal in the RRC idle state to acquire the subgroup information for paging in the predetermined manner and supporting the terminal in the RRC inactive state to acquire the subgroup information for paging in the predetermined manner, the configuration information received by the terminal carries a first identification. In response to the terminal determining that the configuration information carries the first identification, the terminal in the RRC disconnected state monitors the paging message according to the subgroup information for paging.

In an embodiment, in response to the network supporting the terminal in the RRC idle state to acquire the subgroup information for paging in the predetermined manner and supporting the terminal in the RRC inactive state to acquire the subgroup information for paging in the predetermined manner, the configuration information received by the terminal carries a first identification and a second identification. The first identification is configured to indicate that the network supports the terminal in the RRC idle state to acquire the subgroup information for paging in the predetermined manner. The second identification is configured to indicate that the network supports the terminal in the RRC inactive state to acquire the subgroup information for paging in the predetermined manner. In response to the terminal determining that the configuration information carries the first identification and the second identification, the terminal in the RRC disconnected state monitors the paging message according to the subgroup information for paging.

It is to be noted that those skilled in the art may understand that the methods provided in the embodiments of the present disclosure may be executed alone, or may be executed together with some methods in the embodiments of the present disclosure or some methods in related technologies.

As shown in FIG. 14, an embodiment of the present disclosure provides a subgroup paging method. The method is performed by a terminal, and the method includes a step as follows.

In step 141, the terminal in a RRC disconnected state monitors the paging message on a common paging resource, in response to the network not supporting the terminal in a RRC idle state to acquire the subgroup information for paging in the predetermined manner and not supporting the terminal in a RRC inactive state to acquire the subgroup information for paging in the predetermined manner. The RRC disconnected state includes the RRC idle state and the RRC inactive state.

In an embodiment, in response to the network not supporting the terminal in the RRC idle state to acquire the subgroup information for paging in the predetermined manner and not supporting the terminal in the RRC inactive state to acquire the subgroup information for paging in the predetermined manner, the configuration information received by the terminal carries a first identification. In response to the terminal determining that the configuration information carries the first identification, the terminal in the RRC disconnected state monitors the paging message on the common paging resource.

In an embodiment, in response to the network not supporting the terminal in the RRC idle state to acquire the subgroup information for paging in the predetermined manner and not supporting the terminal in the RRC inactive state to acquire the subgroup information for paging in the predetermined manner, the configuration information received by the terminal carries a first identification and a second identification. The first identification is configured to indicate that the network does not support the terminal in the RRC idle state to acquire the subgroup information for paging in the predetermined manner. The second identification is configured to indicate that the network does not support the terminal in the RRC inactive state to acquire the subgroup information for paging in the predetermined manner.

It is to be noted that those skilled in the art may understand that the methods provided in the embodiments of the present disclosure may be executed alone, or may be executed together with some methods in the embodiments of the present disclosure or some methods in related technologies.

As shown in FIG. 15, an embodiment of the present disclosure provides a subgroup paging method. The method is performed by a terminal, and the method includes a step as follows.

In step 151, the configuration information sent by a base station via a broadcast message is received, or the configuration information sent by a base station via a dedicated message is received.

Here, the dedicated message may be a RRC message or other messages.

In an embodiment, in response to the broadcast message carrying the first identification, it is determined that the network does not support paging the terminal in a subgroup paging manner. Alternatively, in response to the broadcast message carrying the second identification, it is determined that the network supports paging the terminal in a subgroup paging manner.

In an embodiment, in response to the base station sending the configuration information via the broadcast message, it is determined that the network supports paging the terminal in a subgroup paging manner. Alternatively, in response to the base station not broadcasting the configuration information, it is determined that the network does not support paging the terminal in a subgroup paging manner. Here, the configuration information may include the subgroup information for paging.

In an embodiment, in response to the configuration information carrying the first identification, it is determined that the network supports acquiring the subgroup information for paging in the first predetermined manner and the second predetermined manner. Alternatively, in response to the configuration information carrying the second identification, it is determined that the network does not support acquiring the subgroup information for paging in the first predetermined manner and the second predetermined manner. In an embodiment, the first predetermined manner is the manner of receiving the subgroup information for paging which is allocated by the network. The second predetermined manner is the manner of randomly selecting the subgroup information for paging.

It is to be noted that those skilled in the art may understand that the methods provided in the embodiments of the present disclosure may be executed alone, or may be executed together with some methods in the embodiments of the present disclosure or some methods in related technologies.

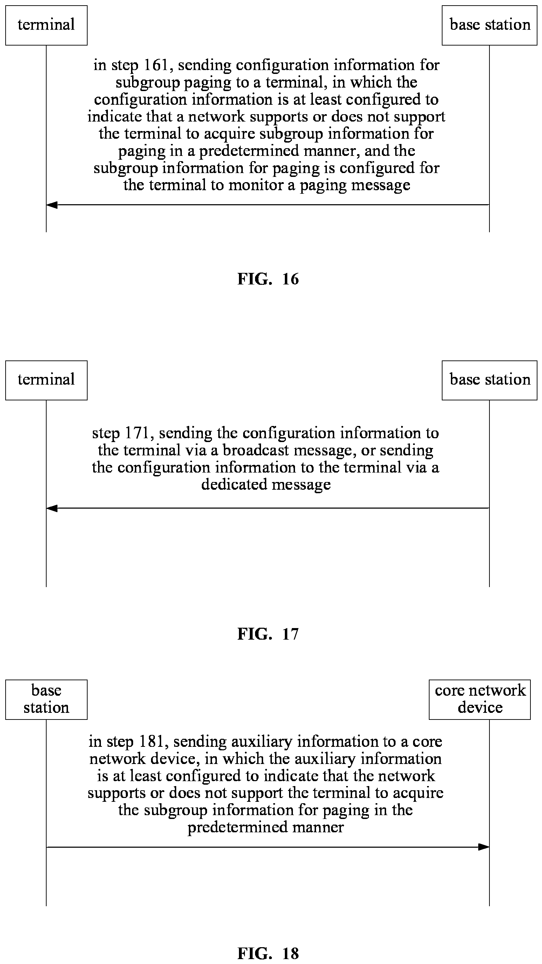

As shown in FIG. 16, an embodiment of the present disclosure provides a subgroup paging method. The method is performed by a base station, and the method includes a step as follows.

In step 161, configuration information for subgroup paging is sent to a terminal. The configuration information is at least configured to indicate that a network supports or does not support the terminal to acquire subgroup information for paging in a predetermined manner, and the subgroup information for paging is configured for the terminal to monitor a paging message.

Here, the terminal may be, but is not limited to, a mobile phone, a wearable device, a vehicle-mounted terminal, a road side unit (RSU), a smart home terminal, an industrial sensing device, and/or a medical device.

Specifically, reference may be made to the description of the configuration information in step 21, which will not be elaborated herein.

In an embodiment, which subgroup the terminal belongs to may be determined by the base station or a core network element. The terminal will send a capability of the terminal to support paging the terminal in a subgroup paging manner to the network. In an embodiment, the network will issue the configuration information for the subgroup paging to the terminal merely when the terminal has the capability to support paging the terminal in the subgroup paging manner. The terminal will receive the configuration information for the subgroup paging sent by the network. Otherwise, in case that the terminal does not have the capability to support paging the terminal in the subgroup paging manner, the network will not issue the configuration information for the subgroup paging to the terminal.

In an embodiment, the subgroup information for paging includes identification information of a subgroup for paging which is allocated by the network. The terminal may determine a subgroup in which the terminal is located according to the identification information. For example, when the identification information indicates "001", the terminal belongs to a first subgroup.

In the embodiment of the present disclosure, the base station sends the configuration information for the subgroup paging to the terminal. The configuration information is at least configured to indicate that the network supports or does not support the terminal to acquire the subgroup information for paging in the predetermined manner, and the subgroup information for paging is configured for the terminal to monitor the paging message. Here, after receiving the configuration information for the subgroup paging, the terminal may determine, according to the configuration information, that the network supports or does not support the terminal to acquire the subgroup information for paging in the predetermined manner. The case of paging failure may be reduced compared to a way in which the subgroup information for paging is always acquired in the predetermined manner without determining whether the network supports the predetermined manner, which may improve the reliability of the network paging the terminal in the subgroup paging manner.

It is to be noted that those skilled in the art may understand that the methods provided in the embodiments of the present disclosure may be executed alone, or may be executed together with some methods in the embodiments of the present disclosure or some methods in related technologies.

In an embodiment, the predetermined manner includes one or more of a first predetermined manner being a manner of receiving subgroup information for paging which is allocated by the network, or a second predetermined manner being a manner of randomly selecting subgroup information for paging.

In an embodiment, the first predetermined manner is indicated by a first identification. The second predetermined manner is indicated by a second identification.

Similarly, for the specific expression of the predetermined manner, reference may be made to the expression in step 21, which will not be elaborated herein.

In an embodiment, the subgroup information for paging includes one or more of identification information of a subgroup for paging which is allocated by the network, paging probability information of the terminal being paged, that is determined by the network, or probability level information of a paging probability of the terminal being paged, that is determined by the network.

Similarly, for the specific expression of the subgroup information for paging, reference may be made to the expression in step 21, which will not be elaborated herein.

As shown in FIG. 17, an embodiment of the present disclosure provides a subgroup paging method. The method is performed by a base station, and the method includes a step as follows.

In step 171, the configuration information is sent to the terminal via a broadcast message, or the configuration information is sent to the terminal via a dedicated message.

Here, the dedicated message may be a RRC message.

In an embodiment, in response to the network not supporting paging the terminal in the subgroup paging manner, the broadcast message carries the first identification. Alternatively, in response to the network supporting paging the terminal in the subgroup paging manner, the broadcast message carries the second identification.

In an embodiment, in response to the network supporting paging the terminal in the subgroup paging manner, the base station sends the configuration information via the broadcast message. Alternatively, in response to the network not supporting paging the terminal in the subgroup paging manner, the base station does not broadcast the configuration information. Here, the configuration information may include the subgroup information for paging.

In an embodiment, in response to the network supporting acquiring the subgroup information for paging in the first predetermined manner and the second predetermined manner, the configuration information carries the first identification. Alternatively, in response to the network not supporting acquiring the subgroup information for paging in the first predetermined manner or the second predetermined manner, the configuration information carries the second identification. In an embodiment, the first predetermined manner is the manner of receiving the subgroup information for paging which is allocated by the network. The second predetermined manner is the manner of randomly selecting the subgroup information for paging.

It is to be noted that those skilled in the art may understand that the methods provided in the embodiments of the present disclosure may be executed alone, or may be executed together with some methods in the embodiments of the present disclosure or some methods in related technologies.

As shown in FIG. 18, an embodiment of the present disclosure provides a subgroup paging method. The method is performed by a base station, and the method includes a step as follows.

In step 181, auxiliary information is sent to a core network device. The auxiliary information is at least configured to indicate that the network supports or does not support the terminal to acquire the subgroup information for paging in the predetermined manner.

In an embodiment, the auxiliary information indicates that the network supports the terminal to acquire the subgroup information for paging in the first predetermined manner and the second predetermined manner. Alternatively, the auxiliary information indicates that the network supports the terminal to acquire the subgroup information for paging in the first predetermined manner but does not support the terminal to acquire the subgroup information for paging in the second predetermined manner. Alternatively, the auxiliary information indicates that the network does not support the terminal to acquire the subgroup information for paging in the first predetermined manner but supports the terminal to acquire the subgroup information for paging in the second predetermined manner. Alternatively, the auxiliary information indicates that the network does not support the terminal to acquire the subgroup information for paging in the first predetermined manner or the second predetermined manner.

In an embodiment, the auxiliary information is sent to the core network device by using a NG interface setup request message, or the auxiliary information is sent to the core network device by using a NG interface setup response message.

It is to be noted that those skilled in the art may understand that the methods provided in the embodiments of the present disclosure may be executed alone, or may be executed together with some methods in the embodiments of the present disclosure or some methods in related technologies.

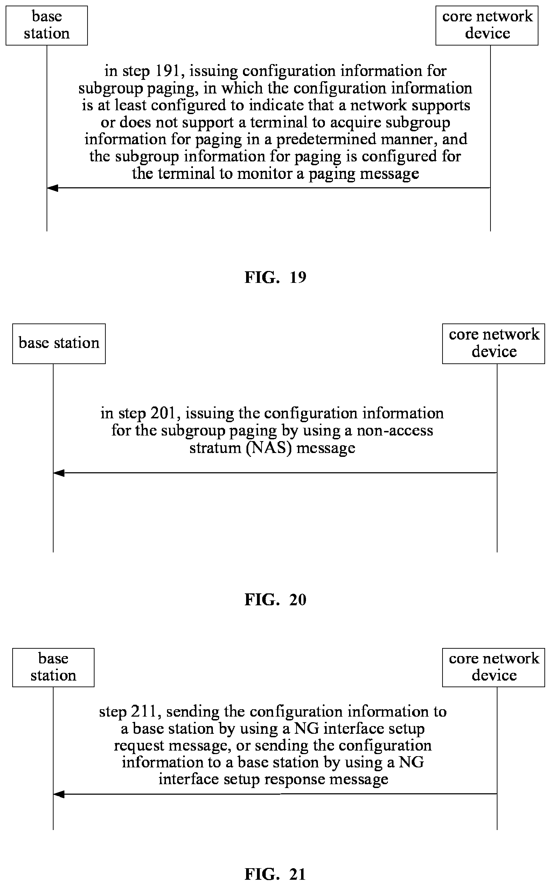

As shown in FIG. 19, an embodiment of the present disclosure provides a subgroup paging method. The method is performed by a core network device, and the method includes a step as follows.

In step 191, configuration information for subgroup paging is issued. The configuration information is at least configured to indicate that a network supports or does not support a terminal to acquire subgroup information for paging in a predetermined manner, and the subgroup information for paging is configured for the terminal to monitor a paging message.

Here, the terminal may be, but is not limited to, a mobile phone, a wearable device, a vehicle-mounted terminal, a road side unit (RSU), a smart home terminal, an industrial sensing device, and/or a medical device.

Here, the network may be an access network and/or a core network. A device in the access network may be a base station. A device in the core network may be a core network device. It is to be noted that the base station involved in the present disclosure may be an access device for a terminal to access a network. Here, the base station may be various types of base stations, for example, a base station of a third generation mobile communication (3G) network, a base station of a fourth generation mobile communication (4G) network, a base station of a fifth generation mobile communication (5G) network, or other evolved base stations.

Specifically, reference may be made to the description of the configuration information in step 21, which will not be elaborated herein.

In an embodiment, which subgroup the terminal belongs to may be determined by the base station or a core network element. The terminal will send a capability of the terminal to support paging the terminal in a subgroup paging manner to the network. In an embodiment, the network will issue the configuration information for the subgroup paging to the terminal merely when the terminal has the capability to support paging the terminal in the subgroup paging manner. The terminal will receive the configuration information for the subgroup paging sent by the network. Otherwise, in case that the terminal does not have the capability to support paging the terminal in the subgroup paging manner, the network will not issue the configuration information for the subgroup paging to the terminal.

In an embodiment, the subgroup information for paging includes identification information of a subgroup for paging which is allocated by the network. The terminal may determine a subgroup in which the terminal is located according to the identification information. For example, when the identification information indicates "001", the terminal belongs to a first subgroup.

It is to be noted that those skilled in the art may understand that the methods provided in the embodiments of the present disclosure may be executed alone, or may be executed together with some methods in the embodiments of the present disclosure or some methods in related technologies.

In an embodiment, the predetermined manner includes one or more of a first predetermined manner being a manner of receiving subgroup information for paging which is allocated by the network, or a second predetermined manner being a manner of randomly selecting subgroup information for paging.

Similarly, for the specific expression of the predetermined manner, reference may be made to the expression in step 21, which will not be elaborated herein.

In an embodiment, the subgroup information for paging includes one or more of identification information of a subgroup for paging which is allocated by the network, paging probability information of the terminal being paged, that is determined by the network, or probability level information of a paging probability of the terminal being paged, that is determined by the network.

Similarly, for the specific expression of subgroup information for paging, reference may be made to the expression in step 21, which will not be elaborated herein.

As shown in FIG. 20, an embodiment of the present disclosure provides a subgroup paging method. The method is performed by a core network device, and the method includes a step as follows.

In step 201, the configuration information for the subgroup paging is issued by using a non-access stratum (NAS) message.

In an embodiment, the NAS message carries subgroup paging information. In an embodiment, the NAS message indicates that the subgroup paging information is subgroup paging information in which the terminal is in a RRC disconnected state. Here, the RRC disconnected state includes a RRC inactive state and/or a RRC idle state.

The configuration information is configured to indicate that the network supports or does not support the terminal in the RRC idle state to acquire the subgroup information for paging in the predetermined manner, and/or the network supports or does not support the terminal in the RRC inactive state to acquire the subgroup information for paging in the predetermined manner.

It is to be noted that those skilled in the art may understand that the methods provided in the embodiments of the present disclosure may be executed alone, or may be executed together with some methods in the embodiments of the present disclosure or some methods in related technologies.

As shown in FIG. 21, an embodiment of the present disclosure provides a subgroup paging method. The method is performed by a core network device, and the method includes a step as follows.

In step 211, the configuration information is sent to a base station by using a NG interface setup request message, or the configuration information is sent to a base station by using a NG interface setup response message.

In an embodiment, the configuration information may also be sent via one of an initial content setup request message, a terminal content modification request message, a handover request message, a path switching request response, or a paging message. In an embodiment, the paging message carries subgroup paging information. In an embodiment, the paging message indicates that the subgroup paging information is subgroup paging information in which the terminal is in a RRC disconnected state. Here, the RRC disconnected state includes a RRC inactive state and/or a RRC idle state.

It is to be noted that those skilled in the art may understand that the methods provided in the embodiments of the present disclosure may be executed alone, or may be executed together with some methods in the embodiments of the present disclosure or some methods in related technologies.

In order to better understand the embodiments of the present disclosure, the technical solution of the present disclosure will be described below through an illustrative embodiment.

Example 1:

A network will configure a paging subgroup solution for a terminal.

In an embodiment, subgroup information for paging is provided or allocated by the network, or it may be randomly selected by the terminal. Here, the subgroup information for paging is configured for the terminal to determine to monitor a subgroup in which the terminal is located when a paging signal is monitored.

In an embodiment, the subgroup information for paging provided or allocated by the network may be a specific allocated subgroup identification (grouping ID).

In an embodiment, the subgroup information for paging provided or allocated by the network may be a paging probability determined by the network. Here, the paging probability may be a probability of the terminal being paged.

In an embodiment, the subgroup information for paging provided or allocated by the network may be a paging probability indication determined by the network. Here, the paging probability indication may be probability level information.

Here, the paging subgroup solution may be A and/or B.

A. What paging subgroup solution is used by the terminal. That is, whether the terminal adopts a paging subgroup solution provided by the network, or selects a paging subgroup solution in a random manner.

In an embodiment, the network notifies the terminal that the network merely supports the paging subgroup solution provided by the network, but does not support the terminal to select the paging subgroup solution in the random manner.

In an embodiment, a behavior of the terminal may be that: in case that the network provides the subgroup information for paging, the terminal may perform monitoring according to the subgroup information for paging. Otherwise, in case that the network does not provide the subgroup information for paging, the terminal may perform monitoring according to a default paging subgroup, or the terminal may perform monitoring on a common paging resource (that is, such paging resources are not used for paging subgroups).

In an embodiment, the network notifies the terminal that the network merely supports the paging subgroup solution selected in the random manner.

In an embodiment, a behavior of the terminal may be that: after the terminal selects the paging subgroup in the random manner, the terminal performs monitoring according to the subgroup information for paging.

In an embodiment, the network notifies the terminal that the network neither supports the paging subgroup solution provided by the network nor supports the terminal to select the paging subgroup solution in the random manner.

In an embodiment, in case that the network does not provide information about a paging subgroup resource, neither of the two manners is supported. At this time, the terminal performs monitoring on the common paging resource.

In an embodiment, the network notifies the terminal to support the paging subgroup solution provided by the network, and also supports the terminal to select the paging subgroup solution in the random manner.

In an embodiment, a behavior of the terminal is that: in case that the network provides the subgroup information for paging, the terminal performs monitoring according to the subgroup information for paging. Otherwise, in case that the network does not provide the subgroup information for paging, the terminal will select the paging subgroup in the random manner.

In an embodiment, selecting a subgroup by the terminal in a random manner is a default support. That is, in case that the base station configures the information about the paging subgroup resource, it implicitly expresses that this manner is supported.

At this time, the network merely needs to provide whether to support the network to provide the paging subgroup solution on this basis.

Furthermore, in case that the network does not provide the information about the paging subgroup resource, neither of the two manners is supported.

B. Whether to distinguish which paging subgroup solution is used in different RRC states.

As an example, the network notifies the terminal that the network merely supports a paging subgroup solution in an idle state, and does not support a paging subgroup solution in an inactive state.

In an embodiment, a behavior of the terminal is that: the terminal in an idle state performs monitoring according to the subgroup information for paging, and the terminal in an inactive state performs monitoring on the common paging resource.

As an example, the network notifies the terminal that the network does not support the paging subgroup solution in the idle state, but supports the paging subgroup solution in the inactive state.

In an embodiment, a behavior of the terminal is that: the terminal in an idle state performs monitoring according to the common paging resource, and the terminal in an inactive state performs monitoring according to the subgroup information for paging.

In an embodiment, the network notifies the terminal that the network supports the paging subgroup solution in the idle state and also supports the paging subgroup solution in the inactive state.

In an embodiment, a behavior of the terminal is that: the terminal in two states, in case that the network provides the subgroup information for paging, the terminal performs monitoring according to the subgroup information for paging (a specific manner may be the paging subgroup solution in A).

As an example, the network notifies the terminal that the network does not support the paging subgroup solution in the idle state or the paging subgroup solution in the inactive state.

Here, the base station may notify the terminal or agree on a paging subgroup solution in advance through a protocol.

In an embodiment, the base station notifies the terminal of the paging subgroup solution by broadcasting.

In an embodiment, the base station notifies the terminal via a dedicated signaling (such as RRC release).

In an embodiment, the base station notifies the terminal by broadcasting display. That is, in case that a value of a switch is false, it means that the paging subgroup solution is not supported.

In an embodiment, the base station implicitly notifies the terminal by broadcasting. That is, not broadcasting the subgroup information for paging means not supporting it.

In an embodiment, the base stations do not distinguish RRC states, that is, they share a switch to indicate whether the subgroup solution is supported.

In an embodiment, the base station may notify the core network of the paging subgroup indication via auxiliary information.

In an embodiment, for a NR system, when a NG interface is established, the base station interacts with a core network via a NG setup request/response message.

Here, the core network may notify the terminal of the paging subgroup solution:

In an embodiment, the core network notifies the terminal of which paging solution to use via a NAS manner.

For example, it is indicated in a NAS message that the subgroup information for paging is merely used in the idle state.

Here, the core network also needs to notify the base station of the paging subgroup solution.

In an embodiment, the core network also needs to notify the base station that the paging subgroup solution is not supported, enabled or disabled the paging subgroup solution.

In an embodiment, the core network and the base station interact with the base station through a non-UE-related signaling. For example, for a NR system, when a NG interface is established, the base station interacts with a core network via a NG setup request/response message.

As an embodiment, the core network interacts with the base station via a UE-related signaling. For example, the UE-related signaling may be one of an initial context setup request message, a UE context modification request message, a handover request message, a path switch request acknowledge, and a paging message.

In an embodiment, it is indicated in the paging message that the subgroup information for paging is merely used in the idle state.

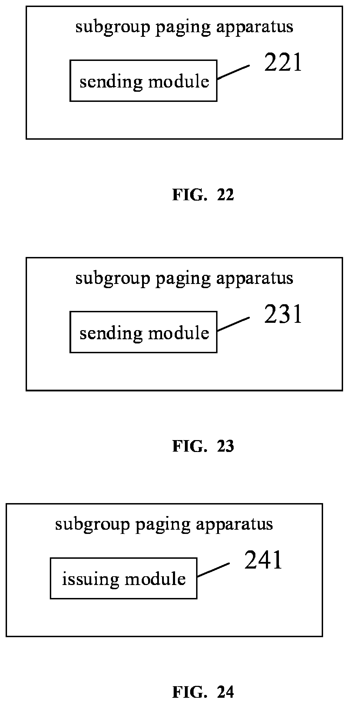

As shown in FIG. 22, an embodiment of the present disclosure provides a subgroup paging apparatus. The apparatus includes a sending module 221.

The sending module 221 is configured to send configuration information for subgroup paging to a terminal. The configuration information is at least configured to indicate that a network supports or does not support the terminal to acquire subgroup information for paging in a predetermined manner, and the subgroup information for paging is configured for the terminal to monitor a paging message.

It is to be noted that those skilled in the art may understand that the methods provided in the embodiments of the present disclosure may be executed alone, or may be executed together with some methods in the embodiments of the present disclosure or some methods in related technologies.

As shown in FIG. 23, an embodiment of the present disclosure provides a subgroup paging apparatus. The apparatus includes a sending module 231.

The sending module 231 is configured to send configuration information for subgroup paging to a terminal. The configuration information is at least configured to indicate that a network supports or does not support the terminal to acquire subgroup information for paging in a predetermined manner, and the subgroup information for paging is configured for the terminal to monitor a paging message.

It is to be noted that those skilled in the art may understand that the methods provided in the embodiments of the present disclosure may be executed alone, or may be executed together with some methods in the embodiments of the present disclosure or some methods in related technologies.

As shown in FIG. 24, an embodiment of the present disclosure provides a subgroup paging apparatus. The apparatus includes an issuing module 241.

The issuing module 241 is configured to issue configuration information for subgroup paging. The configuration information is at least configured to indicate that a network supports or does not support a terminal to acquire subgroup information for paging in a predetermined manner, and the subgroup information for paging is configured for the terminal to monitor a paging message.

It is to be noted that those skilled in the art may understand that the methods provided in the embodiments of the present disclosure may be executed alone, or may be executed together with some methods in the embodiments of the present disclosure or some methods in related technologies.

An embodiment of the present disclosure provides a communication device. The communication device includes a processor, and a memory for storing instructions executable by the processor. The processor is configured to implement the method of any one of embodiments of the present disclosure when running the executable instructions.

The processor may include various types of storage media, which are non-temporary computer storage media that may continue to memorize information stored thereon after the communication device is powered down.

The processor may be connected with the memory via a bus or the like for reading executable program stored in the memory.

An embodiment of the present disclosure also provides a computer storage medium. The computer storage medium has stored therein computer-executable programs that, when executed by a processor, cause the method of any one of embodiments of the present disclosure to be implemented.

With respect to the apparatus in the above-mentioned embodiment, the specific manners for performing operations for individual modules therein have been described in detail in the embodiments regarding the method, which will not be elaborated herein.

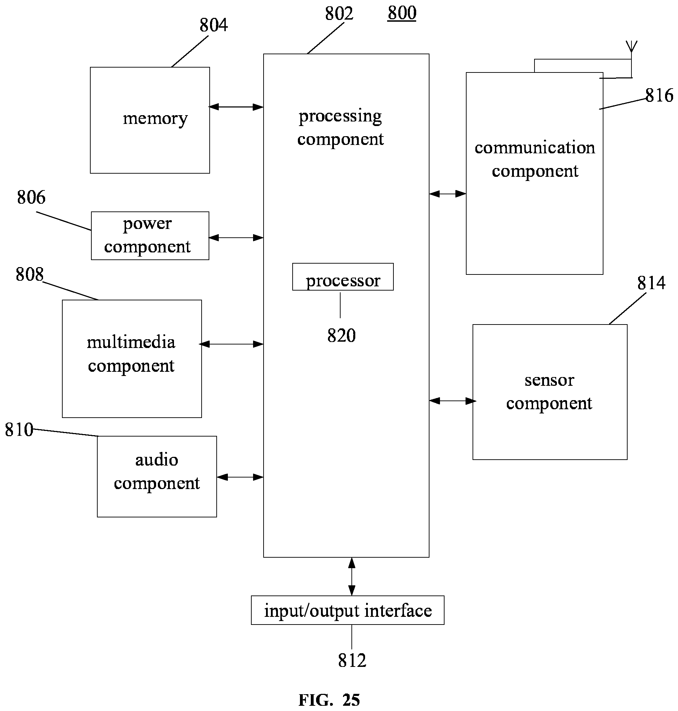

As shown in FIG. 25, an embodiment of the present disclosure provides a structure of a terminal.

Referring to a terminal 800 shown in FIG. 25, an embodiment of the present disclosure provides the terminal 800. The terminal 800 specifically may be a mobile phone, a computer, a digital broadcast terminal, a messaging device, a game console, a tablet device, a medical device, a fitness device, a personal digital assistant, or the like.

Referring to FIG. 25, the terminal 800 may include one or more of a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, phone calls, data communications, camera operations, and recording operations. The processing component 802 can include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 can access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal 800 may be implemented with one or more of an application specific integrated circuit (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned methods.

In an illustrative embodiment, there is also provided a non-transitory computer readable storage medium including instructions, such as included in the memory 804, executable by the processor 820 in the terminal 800, for completing the above-mentioned methods. For example, the non-transitory computer-readable storage medium may be a ROM, a random access memory (RAM), a CD-ROM, a magnetic tape, a floppy disc, an optical data storage device, and the like.

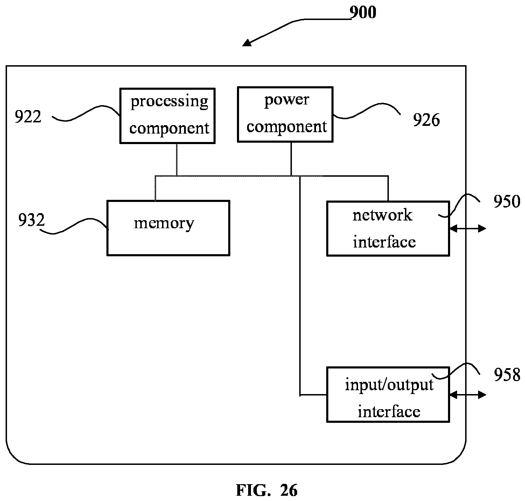

As shown in FIG. 26, an embodiment of the present disclosure shows a structure of a base station. For example, a base station 900 may be provided as a network side device. Referring to FIG. 26, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any of the above-mentioned methods performed by the base station.

The network device 900 may further include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server™, Mac OS X™, Unix™, Linux™, FreeBSD™ or the like.

Other embodiments of the disclosure will be apparent to those skilled in the art from consideration of the specification and practice of the disclosure disclosed here. The present disclosure is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

**Claims**

1. A subgroup paging method, performed by a terminal, comprising:

    receiving configuration information for subgroup paging;
    wherein the configuration information is at least configured to indicate that a network supports or does not support the terminal to acquire subgroup information for paging in a predetermined manner; and the subgroup information for paging is configured for the terminal to monitor a paging message.

2. The method of claim 1, wherein the predetermined manner comprises one or more of:

    a first predetermined manner being a manner of receiving subgroup information for paging which is allocated by the network; and
    a second predetermined manner being a manner of randomly selecting subgroup information for paging.

3. The method of claim 2, wherein the subgroup information for paging comprises one or more of:

    identification information of a subgroup for paging which is allocated by the network;
    paging probability information of the terminal being paged, that is determined by the network; and
    probability level information of a paging probability of the terminal being paged, that is determined by the network.

4. The method of claim 2, further comprising:
    in response to the network supporting the terminal to acquire the subgroup information for paging in the first predetermined manner but not supporting the terminal to acquire the subgroup information for paging in the second predetermined manner, determining a manner of monitoring the paging message according to a result of the network receiving the information for subgroup paging.

5. The method of claim 4, wherein determining the manner of monitoring the paging message according to the result of the network receiving the information for subgroup paging comprises:

 determining to monitor the paging message according to the subgroup information for paging, in response to having received the subgroup information for paging sent by the network; or

 determining to monitor the paging message according to predetermined subgroup information for paging, in response to not having received the subgroup information for paging sent by the network; or

 determining to monitor the paging message on a common paging resource, in response to not having received the subgroup information for paging sent by the network.

6. The method of claim 2, further comprising:
in response to the network not supporting the terminal to acquire the subgroup information for paging in the first predetermined manner but supporting the terminal to acquire the subgroup information for paging in the second predetermined manner, determining to monitor the paging message according to randomly selected subgroup information for paging.

7. The method of claim 2, further comprising:
in response to neither the network supporting the terminal to acquire the subgroup information for paging in the first predetermined manner nor the network supporting the terminal to acquire the subgroup information for paging in the second predetermined manner, determining to monitor the paging message on a common paging resource.

8. The method of claim 7, further comprising:
determining that the network does not support the terminal to acquire the subgroup information for paging in the first predetermined manner or the second predetermined manner, in response to not having received the subgroup information for paging sent by the network.

9. The method of claim 2, further comprising:
in response to both the network supporting the terminal to acquire the subgroup information for paging in the first predetermined manner and the second predetermined manner, determining a manner of monitoring the paging message according to a result of the network receiving the information for subgroup paging.

10. The method of claim 9, wherein determining the manner of monitoring the paging message according to the result of the network receiving the information for subgroup paging comprises:

 determining to monitor the paging message according to the subgroup information for paging, in response to having received the subgroup information for paging sent by the network; or

 determining to monitor the paging message according to randomly selected subgroup information for paging, in response to not having received the subgroup information for paging sent by the network.

11. The method of claim 9, further comprising:

 determining that the network supports the terminal to acquire the subgroup information for paging in the second predetermined manner, in response to having received the subgroup information for paging; or

 determining that the network does not support the terminal to acquire the subgroup information for paging in the first predetermined manner or the second predetermined manner, in response to not having received the subgroup information for paging.

12. The method of claim 2, further comprising:

 monitoring, by the terminal in a radio resource control (RRC) idle state, the paging message according to the subgroup information for paging, in response to the network supporting the terminal in the RRC idle state to acquire the subgroup information for paging in the predetermined manner but not supporting the terminal in a RRC inactive state to acquire the subgroup information for paging in the predetermined manner; or

 monitoring, by the terminal in a RRC inactive state, the paging message on a common paging resource, in response to the network supporting the terminal in a RRC idle state to acquire the subgroup information for paging in the predetermined manner but not supporting the terminal in the RRC inactive state to acquire the subgroup information for paging in the predetermined manner.

13. The method of claim 2, further comprising:

monitoring, by the terminal in a RRC idle state, the paging message on a common paging resource, in response to the network not supporting the terminal in the RRC idle state to acquire the subgroup information for paging in the predetermined manner but supporting the terminal in a RRC inactive state to acquire the subgroup information for paging in the predetermined manner; or
monitoring, by the terminal in a RRC inactive state, the paging message according to the subgroup information for paging, in response to the network not supporting the terminal in a RRC idle state to acquire the subgroup information for paging in the predetermined manner but supporting the terminal in the RRC inactive state to acquire the subgroup information for paging in the predetermined manner.

14. The method of claim 2, further comprising:
monitoring, by the terminal in a RRC disconnected state, the paging message according to the subgroup information for paging sent by the network, in response to the network supporting the terminal in a RRC idle state to acquire the subgroup information for paging in the predetermined manner and supporting the terminal in a RRC inactive state to acquire the subgroup information for paging in the predetermined manner; wherein the RRC disconnected state comprises the RRC idle state and the RRC inactive state.

15. The method of claim 2, further comprising:
monitoring, by the terminal in a RRC disconnected state, the paging message on a common paging resource, in response to the network not supporting the terminal in a RRC idle state to acquire the subgroup information for paging in the predetermined manner and not supporting the terminal in a RRC inactive state to acquire the subgroup information for paging in the predetermined manner; wherein the RRC disconnected state comprises the RRC idle state and the RRC inactive state.

16. The method of claim 1, wherein receiving the configuration information for the subgroup paging comprises:

receiving the configuration information sent by a base station via a broadcast message; or
receiving the configuration information sent by a base station via a dedicated message.

17. A subgroup paging method, performed by a base station, comprising:

sending configuration information for subgroup paging to a terminal;
wherein the configuration information is at least configured to indicate that a network supports or does not support the terminal to acquire subgroup information for paging in a predetermined manner; and the subgroup information for paging is configured for the terminal to monitor a paging message.

18. The method of claim 17, wherein the predetermined manner comprises one or more of:

a first predetermined manner being a manner of receiving subgroup information for paging which is allocated by the network; and
a second predetermined manner being a manner of randomly selecting subgroup information for paging.

19. The method of claim 18, wherein the subgroup information for paging comprises one or more of:

identification information of a subgroup for paging which is allocated by the network;
paging probability information of the terminal being paged, that is determined by the network; and
probability level information of a paging probability of the terminal being paged, that is determined by the network.

20. The method of claim 17, wherein sending the configuration information for the subgroup paging to the terminal comprises:

sending the configuration information to the terminal via a broadcast message; or
sending the configuration information to the terminal via a dedicated message.

21. The method of claim 17, further comprising:

sending auxiliary information to a core network device;

wherein the auxiliary information is at least configured to indicate that the network supports or does not support the terminal to acquire the subgroup information for paging in the predetermined manner.

22. The method of claim 21, wherein sending the auxiliary information to the core network device comprises:

sending the auxiliary information to the core network device by using a NG interface setup request message; or sending the auxiliary information to the core network device by using a NG interface setup response message.

23. A subgroup paging method, performed by a core network device, comprising:

issuing configuration information for subgroup paging;
wherein the configuration information is at least configured to indicate that a network supports or does not support a terminal to acquire subgroup information for paging in a predetermined manner; and the subgroup information for paging is configured for the terminal to monitor a paging message.

24. The method of claim 23, wherein the predetermined manner comprises one or more of:

a first predetermined manner being a manner of receiving subgroup information for paging which is allocated by the network; and
a second predetermined manner being a manner of randomly selecting subgroup information for paging.

25. The method of claim 24, wherein the subgroup information for paging comprises one or more of:

identification information of a subgroup for paging which is allocated by the network;
paging probability information of the terminal being paged, that is determined by the network; and
probability level information of a paging probability of the terminal being paged, that is determined by the network.

26. The method of claim 23, wherein issuing the configuration information for the subgroup paging comprises:
issuing the configuration information for the subgroup paging by using a non-access stratum (NAS) message.

27. The method of claim 23, wherein issuing the configuration information for the subgroup paging comprises:

sending the configuration information to a base station by using a NG interface setup request message; or
sending the configuration information to a base station by using a NG interface setup response message.

28. A subgroup paging apparatus, comprising:

a receiving module configured to receive configuration information for subgroup paging;
wherein the configuration information is at least configured to indicate that a network supports or does not support a terminal to acquire subgroup information for paging in a predetermined manner; and the subgroup information for paging is configured for the terminal to monitor a paging message.

29. A subgroup paging apparatus, comprising:

a sending module configured to send configuration information for subgroup paging to a terminal;
wherein the configuration information is at least configured to indicate that a network supports or does not support the terminal to acquire subgroup information for paging in a predetermined manner; and the subgroup information for paging is configured for the terminal to monitor a paging message.

30. A subgroup paging apparatus, comprising:

an issuing module configured to issue configuration information for subgroup paging;
wherein the configuration information is at least configured to indicate that a network supports or does not support a terminal to acquire subgroup information for paging in a predetermined manner; and the subgroup information for paging is configured for the terminal to monitor a paging message.

31. A communication device, comprising:

a memory; and

a processor connected to an antenna and the memory, respectively, and configured to control transmission and reception of the antenna and be capable of implementing the method of any one of claims 1 to 16, claims 17 to 22, or claims 23 to 27, by executing computer-executable instructions stored in the memory.

32. A computer storage medium having stored therein computer-executable instructions that, after executed by a processor, cause the method of any one of claims 1 to 16, claims 17 to 22, or claims 23 to 27 to be implemented.

**FIG. 1**

in step 21, receiving configuration information for subgroup paging, in which the configuration information is at least configured to indicate that a network supports or does not support the terminal to acquire subgroup information for paging in a predetermined manner, and the subgroup information for paging is configured for the terminal to monitor a paging message

**FIG. 2**

```
┌──────────┐                                              ┌──────────┐
│ terminal │                                              │   base   │
│          │                                              │  station │
└────┬─────┘                                              └────┬─────┘
     │                                                         │
┌────┴──────────────────────────────────────────────────┐    │
│  in step 31, in response to the network supporting the │    │
│  terminal to acquire the subgroup information for      │    │
│  paging in the first predetermined manner but not      │    │
│  supporting the terminal to acquire the subgroup       │    │
│  information for paging in the second predetermined    │    │
│  manner, determining a manner of monitoring the paging │    │
│  message according to a result of the network          │    │
│  receiving the information for subgroup paging         │    │
└────┬───────────────────────────────────────────────────┘    │
     │              wireless transmission                      │
     │◄───────────────────────────────────────────────────────►│
     │                                                         │
```

**FIG. 3**

```
┌──────────┐                                              ┌──────────┐
│ terminal │                                              │   base   │
│          │                                              │  station │
└────┬─────┘                                              └────┬─────┘
     │                                                         │
┌────┴───────────────────────────────────────────────────┐   │
│  in step 41, determining to monitor the paging message  │   │
│  according to the subgroup information for paging, in    │   │
│  response to having received the subgroup information    │   │
│  for paging sent by the network, or determining to       │   │
│  monitor the paging message according to predetermined   │   │
│  subgroup information for paging, in response to not      │   │
│  having received the subgroup information for paging      │   │
│  sent by the network, or determining to monitor the      │   │
│  paging message on a common paging resource, in          │   │
│  response to not having received the subgroup            │   │
│  information for paging sent by the network              │   │
└────┬────────────────────────────────────────────────────┘   │
     │              wireless transmission                      │
     │◄───────────────────────────────────────────────────────►│
     │                                                         │
```

**FIG. 4**

```
┌──────────┐                                              ┌──────────┐
│ terminal │                                              │   base   │
│          │                                              │  station │
└────┬─────┘                                              └────┬─────┘
     │                                                         │
┌────┴───────────────────────────────────────────────────┐   │
│  in step 51, in response to the network not supporting  │   │
│  the terminal to acquire the subgroup information for    │   │
│  paging in the first predetermined manner but            │   │
│  supporting the terminal to acquire the subgroup        │   │
│  information for paging in the second predetermined      │   │
│  manner, determining to monitor the paging message       │   │
│  according to randomly selected subgroup information     │   │
│  for paging                                              │   │
└────┬────────────────────────────────────────────────────┘   │
     │              wireless transmission                      │
     │◄───────────────────────────────────────────────────────►│
     │                                                         │
```

**FIG. 5**

terminal | base station

in step 61, in response to neither the network supporting the terminal to acquire the subgroup information for paging in the first predetermined manner nor the network supporting the terminal to acquire the subgroup information for paging in the second predetermined manner, determining to monitor the paging message on a common paging resource

wireless transmission

**FIG. 6**

terminal | base station

in step 71, determining that the network does not support the terminal to acquire the subgroup information for paging in the first predetermined manner or the second predetermined manner, in response to not having received the subgroup information for paging sent by the network

wireless transmission

**FIG. 7**

terminal | base station

in step 81, in response to both the network supporting the terminal to acquire the subgroup information for paging in the first predetermined manner and the second predetermined manner, determining a manner of monitoring the paging message according to a result of the network receiving the information for subgroup paging

wireless transmission

**FIG. 8**

```
┌──────────┐                                          ┌──────────┐
│ terminal │                                          │  base    │
│          │                                          │ station  │
└────┬─────┘                                          └────┬─────┘
     │                                                     │
┌────┴────────────────────────────────────────────────┐   │
│ in step 91, determining to monitor the paging message│   │
│ according to the subgroup information for paging, in  │   │
│ response to having received the subgroup information  │   │
│ for paging sent by the network, or determining to     │   │
│ monitor the paging message according to randomly      │   │
│ selected subgroup information for paging, in response  │   │
│ to not having received the subgroup information for    │   │
│ paging sent by the network                             │   │
└────┬───────────────────────────────────────────────┘   │
     │              wireless transmission                  │
     │<─────────────────────────────────────────────────> │
     │                                                     │
```

**FIG. 9**

```
┌──────────┐                                          ┌──────────┐
│ terminal │                                          │  base    │
│          │                                          │ station  │
└────┬─────┘                                          └────┬─────┘
┌────┴───────────────────────────────────────────────┐   │
│ in step 101, determining that the network supports   │   │
│ the terminal to acquire the subgroup information for  │   │
│ paging in the second predetermined manner, in         │   │
│ response to having received the subgroup information  │   │
│ for paging, or determining that the network does not  │   │
│ support the terminal to acquire the subgroup          │   │
│ information for paging in the first predetermined      │   │
│ manner or the second predetermined manner, in         │   │
│ response to not having received the subgroup          │   │
│ information for paging                                 │   │
└────┬───────────────────────────────────────────────┘   │
     │              wireless transmission                  │
     │<─────────────────────────────────────────────────> │
     │                                                     │
```

**FIG. 10**

| terminal | | base station |
|---|---|---|

in step 111, monitoring, by the terminal in a radio resource control (RRC) idle state, the paging message according to the subgroup information for paging, in response to the network supporting the terminal in the RRC idle state to acquire the subgroup information for paging in the predetermined manner but not supporting the terminal in a RRC inactive state to acquire the subgroup information for paging in the predetermined manner, or monitoring, by the terminal in a RRC inactive state, the paging message on a common paging resource, in response to the network supporting the terminal in a RRC idle state to acquire the subgroup information for paging in the predetermined manner but not supporting the terminal in the RRC inactive state to acquire the subgroup information for paging in the predetermined manner

wireless transmission

**FIG. 11**

| terminal | | base station |
|---|---|---|

in step 121, monitoring, by the terminal in a RRC idle state, the paging message on a common paging resource, in response to the network not supporting the terminal in the RRC idle state to acquire the subgroup information for paging in the predetermined manner but supporting the terminal in a RRC inactive state to acquire the subgroup information for paging in the predetermined manner, or monitoring, by the terminal in a RRC inactive state, the paging message according to the subgroup information for paging, in response to the network not supporting the terminal in a RRC idle state to acquire the subgroup information for paging in the predetermined manner but supporting the terminal in the RRC inactive state to acquire the subgroup information for paging in the predetermined manner

wireless transmission

**FIG. 12**

```
┌──────────┐                                      ┌──────────┐
│ terminal │                                      │   base   │
└────┬─────┘                                      │ station  │
     │                                            └────┬─────┘
┌────┴────────────────────────────────────────────────┐  │
│ in step 131, monitoring, by the terminal in a RRC    │  │
│ disconnected state, the paging message according to  │  │
│ the subgroup information for paging sent by the       │  │
│ network, in response to the network supporting the   │  │
│ terminal in a RRC idle state to acquire the subgroup │  │
│ information for paging in the predetermined manner   │  │
│ and supporting the terminal in a RRC inactive state  │  │
│ to acquire the subgroup information for paging in    │  │
│ the predetermined manner, in which the RRC           │  │
│ disconnected state includes the RRC idle state and   │  │
│ the RRC inactive state                               │  │
└──────────────────────────────────────────────────────┘  │
     │                                            │
     │         wireless transmission             │
     │◄─────────────────────────────────────────►│
     │                                            │
```

**FIG. 13**

```
┌──────────┐                                      ┌──────────┐
│ terminal │                                      │   base   │
└────┬─────┘                                      │ station  │
     │                                            └────┬─────┘
┌────┴────────────────────────────────────────────────┐  │
│ in step 141, monitoring, by the terminal in a RRC    │  │
│ disconnected state, the paging message on a common   │  │
│ paging resource, in response to the network not      │  │
│ supporting the terminal in a RRC idle state to       │  │
│ acquire the subgroup information for paging in the   │  │
│ predetermined manner and not supporting the terminal │  │
│ in a RRC inactive state to acquire the subgroup      │  │
│ information for paging in the predetermined manner,  │  │
│ in which the RRC disconnected state includes the RRC │  │
│ idle state and the RRC inactive state                │  │
└──────────────────────────────────────────────────────┘  │
     │                                            │
     │         wireless transmission             │
     │◄─────────────────────────────────────────►│
     │                                            │
```

**FIG. 14**

```
┌──────────────┐                          ┌──────────────┐
│   second     │                          │ base station │
│ base station │                          └──────┬───────┘
└──────┬───────┘                                 │
       │                                         │
       │  in step 151, receiving the             │
       │  configuration information sent by a    │
       │  base station via a broadcast message,  │
       │  or receiving the configuration         │
       │  information sent by a base station     │
       │  via a dedicated message                │
       │◄────────────────────────────────────────
       │                                         │
       │                                         │
```

**FIG. 15**

| terminal | | base station |
|---|---|---|

in step 161, sending configuration information for subgroup paging to a terminal, in which the configuration information is at least configured to indicate that a network supports or does not support the terminal to acquire subgroup information for paging in a predetermined manner, and the subgroup information for paging is configured for the terminal to monitor a paging message

**FIG. 16**

| terminal | | base station |
|---|---|---|

step 171, sending the configuration information to the terminal via a broadcast message, or sending the configuration information to the terminal via a dedicated message

**FIG. 17**

| base station | | core network device |
|---|---|---|

in step 181, sending auxiliary information to a core network device, in which the auxiliary information is at least configured to indicate that the network supports or does not support the terminal to acquire the subgroup information for paging in the predetermined manner

**FIG. 18**

base station           core network device

in step 191, issuing configuration information for subgroup paging, in which the configuration information is at least configured to indicate that a network supports or does not support a terminal to acquire subgroup information for paging in a predetermined manner, and the subgroup information for paging is configured for the terminal to monitor a paging message

**FIG. 19**

base station           core network device

in step 201, issuing the configuration information for the subgroup paging by using a non-access stratum (NAS) message

**FIG. 20**

base station           core network device

step 211, sending the configuration information to a base station by using a NG interface setup request message, or sending the configuration information to a base station by using a NG interface setup response message

**FIG. 21**

subgroup paging apparatus

sending module — 221

**FIG. 22**

subgroup paging apparatus

sending module — 231

**FIG. 23**

subgroup paging apparatus

issuing module — 241

**FIG. 24**

FIG. 25

**900**

922 processing component

power component 926

932 memory

network interface 950

input/output interface 958

**FIG. 26**

## INTERNATIONAL SEARCH REPORT

| | International application No. |
|---|---|
| | **PCT/CN2021/101631** |

**A. CLASSIFICATION OF SUBJECT MATTER**

H04W 68/00(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; 3GPP; CNKI: 分组, 子组, 寻呼, 支持, 方式, 模式, 网络, 分配, 随机, 指示, group, paging, support+, mode, NW, RAN, CN, controlled, random+, UE_ID, indicat+

**C. DOCUMENTS CONSIDERED TO BE RELEVANT**

| Category* | Citation of document, with indication, where appropriate, of the relevant passages | Relevant to claim No. |
|---|---|---|
| X | ERICSSON. "Grouping Methods for Paging" *3GPP TSG-RAN2 Meeting #114-e R2-2105656,* 11 May 2021 (2021-05-11), pp. 1-5 | 1-32 |
| A | CN 110944371 A (CHINA MOBILE COMMUNICATION LTD., RESEARCH INSTITUTE et al.) 31 March 2020 (2020-03-31) entire document | 1-32 |
| A | CN 108353382 A (FUJITSU LTD.) 31 July 2018 (2018-07-31) entire document | 1-32 |
| A | US 2016014718 A1 (SIERRA WIRELESS, INC.) 14 January 2016 (2016-01-14) entire document | 1-32 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 February 2022** | **16 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/101631**

| Patent document cited in search report | | | Publication date (day/month/year) | Patent family member(s) | | | Publication date (day/month/year) |
|---|---|---|---|---|---|---|---|
| CN | 110944371 | A | 31 March 2020 | None | | | |
| CN | 108353382 | A | 31 July 2018 | WO | 2017101102 | A1 | 22 June 2017 |
| | | | | KR | 20180081784 | A | 17 July 2018 |
| | | | | JP | 2019503127 | A | 31 January 2019 |
| | | | | JP | 6638813 | B2 | 29 January 2020 |
| | | | | US | 2020154394 | A1 | 14 May 2020 |
| | | | | US | 11032795 | B2 | 08 June 2021 |
| | | | | MX | 2018006711 | A | 27 August 2018 |
| | | | | EP | 3393183 | A1 | 24 October 2018 |
| | | | | EP | 3393183 | A4 | 18 September 2019 |
| | | | | US | 2018270790 | A1 | 20 September 2018 |
| | | | | US | 10660066 | B2 | 19 May 2020 |
| | | | | IN | 201837019248 | A | 15 June 2018 |
| | | | | CN | 108353382 | B | 18 May 2021 |
| US | 2016014718 | A1 | 14 January 2016 | WO | 2016008044 | A1 | 21 January 2016 |

Form PCT/ISA/210 (patent family annex) (January 2015)